# EUROPÄISCHE PATENTSCHRIFT

(11) **EP 2 196 418 B1**
(45) Veröffentlichungstag und Bekanntmachung des Hinweises auf die Patenterteilung: **24.04.2013**
(21) Anmeldenummer: 08171639.1
(22) Anmeldetag: 15.12.2008
(51) Int. Cl.: B65G 69/28, E01D 15/127, E04G 5/00

(54) **Bewegbare Be- und Entladerampe**
Mobile loading and unloading ramp
Rampe de chargement et de déchargement mobile

(43) Veröffentlichungstag der Anmeldung: 16.06.2010
(73) Patentinhaber: GbR. J. Nagel U.H. Nagel - Industriemontage, 63179 Obertshausen (DE)
(72) Erfinder: Nagel, Jörg, 63179 Obertshausen (DE)
(74) Vertreter: Buchhold, Jürgen

(56) Entgegenhaltungen:
- DE-A1- 4 335 544
- DE-A1- 19 630 359
- US-A- 3 034 162
- US-A- 4 807 317

## Beschreibung

Die Erfindung betrifft eine bewegbare Be- und Entladerampe nach dem Oberbegriff des Patentanspruchs 1.

Der Transport von Gerätschaften oder Fahrzeugen erfolgt heute immer häufiger auch mittels Lastkraftwagen. Dabei werden die Gerätschaften oder Fahrzeuge über Rampen auf die Lastkraftwagen transportiert oder von diesen Lastkraftwagen wieder entfernt. Mittlerweile existieren eine ganze Reihe verschiedener Rampensysteme, mit denen ein solcher Lastkraftwagen be- oder entladen werden kann.

Bekannt ist eine Klapprampe mit einem ersten Rampenteil mit einer Unterseite sowie einem zweiten Rampenteil mit einer Unterseite (DE 10 2006 017 555 A1). Diese Klapprampe umfasst ferner ein Scharnier, das den ersten Rampenteil verschwenkbar mit dem zweiten Rampenteil verbindet sowie einen Zugseilaufbau, die an der Unterseite der ersten und zweiten Rampenteile angeordnet ist.

Ferner ist eine Rampe für ein Fahrzeug bekannt, die eine Schiene aufweist, die zwischen dem Boden und der Laderampe des Fahrzeugs angeordnet ist (US 2006/0225229 A1). Die Schiene besteht aus mehreren über Gelenke verbundenen Modulen, die relativ zueinander bewegbar sind, so dass diese ineinander stapelbar sind.

Weiterhin ist ein modular koppelbarer Ladeboden für einen Lastkraftwagen bekannt (DE 200 16 115 U1). Der Ladeboden weist einen als Rahmenkonstruktion aufgebauten Boden auf, auf welchem Fördermittel zum Bewegen von Lasten angeordnet sind. Mehrere dieser Böden können zu einer Transportstrecke zusammengeschlossen werden. Dabei weisen die Böden endseitige Verriegelungen auf.

Schließlich ist eine gattungsgemäße bewegbare Brückeneinheit bekannt, die eine zentrale Rahmenstruktur aufweist und Mittel, mit denen die Rahmenstruktur erweitert werden kann (US-A-3,034,162). Diese Mittel zum Erweitern der Rahmenstruktur sind im nicht aufgebauten Zustand auf der Rahmenstruktur gelagert. Mit dieser bewegbaren Brückeneinheit ist es möglich, eine Plattform, eine Ebene oder Ähnliches aufzubauen.

Aufgabe der vorliegenden Erfindung ist es, eine modular aufgebaute, bewegbare Be- und Entladerampe bereitzustellen, die sich sehr leicht aufbauen und flexibel einsetzen lässt.

Diese Aufgabe wird nach den Merkmalen des Patentanspruchs 1 gelöst.

Die Erfindung betrifft somit eine bewegbare Be- und Entladerampe nach Anspruch 1. Ein jedes Modul ist dabei derart ausgebildet, dass direkt an dieses Modul mindestens zwei weitere Module angeordnet werden können. Vorteilhaft ist dabei, dass durch diese Module eine Be- und Entladerampe bereitgestellt werden kann, die ein komplexes Wegesystem aufweist. Durch den modularen Aufbau der Be- und Entladerampe können Höhenunterschiede einfach ausgeglichen werden.

Die Erfindung wird anhand der Figuren dargestellt und näher erläutert. Es zeigen:
Figur 1 eine perspektivische Ansicht der bewegbaren Be- und Entladerampe;
Figur 2 einen Schnitt durch die bewegbare Be- und Entladerampe gemäß Figur 1;
Figur 3 einen Ausschnitt einer Draufsicht auf die bewegbare Be- und Entladerampe im aufgebauten Zustand gemäß Figur 2;
Figur 4 eine weitere Ansicht der bewegbaren Be- und Entladerampe gemäß Figur 1;
Figur 5 einen Modulbrückenverbinder der Be- und Entladerampe nach Figur 4;
Figur 6 einen Schnitt C-C durch den Modulbrückenverbinder gemäß Figur 5;
Figur 7 einen Ausschnitt des in Figur 6 gezeigten Modulbrückenverbinders nach Schnitt D-D;
Figur 8 einen Stützfuß des in Figur 5 dargestellten Modulbrückenverbinders;
Figur 9 einen vergrößerten Ausschnitt der in Figur 4 dargestellten Be- und Entladerampe;
Figur 10 einen weiteren vergrößerten Ausschnitt der in Figur 4 gezeigten Be- und Entladerampe;
Figur 11 einen Pfosten eines Geländerlaufs gemäß Figur 4;
Figur 12 eine Variante der in Figur 3 dargestellten Be- und Entladerampe;
Figur 13 eine perspektivische Ansicht eines in Figur 3 gezeigten Moduls der Be- und Entladerampe;
Figur 14 eine Variante des in Figur 5 dargestellten Modulbrückenverbinders;
Figur 15 zeigt einen Schnitt F-F durch den in Figur 14 gezeigten Modulbrückenverbinder;
Figur 16 eine Draufsicht auf einen Ausschnitt des in den Figuren 14 und 15 dargestellten Modulbrückenverbinders;
Figur 17 ein an einen Pfosten des in den Figuren 14 bis 16 gezeigten Modulbrückenverbinders angeordnetes Blech;
Figur 18 eine Variante des in den Figuren 5 bis 7 dargestellten Modulbrückenverbinders,
Figur 19 eine Draufsicht des in Figur 18 dargestellten Modulbrückenverbinders,
Figur 20 eine Seitenansicht des in Figur 18 dargestellten Modulbrückenverbinders;
Figur 21 eine weitere Ansicht des in Figur 18 dargestellten Modulbrückenverbinders.

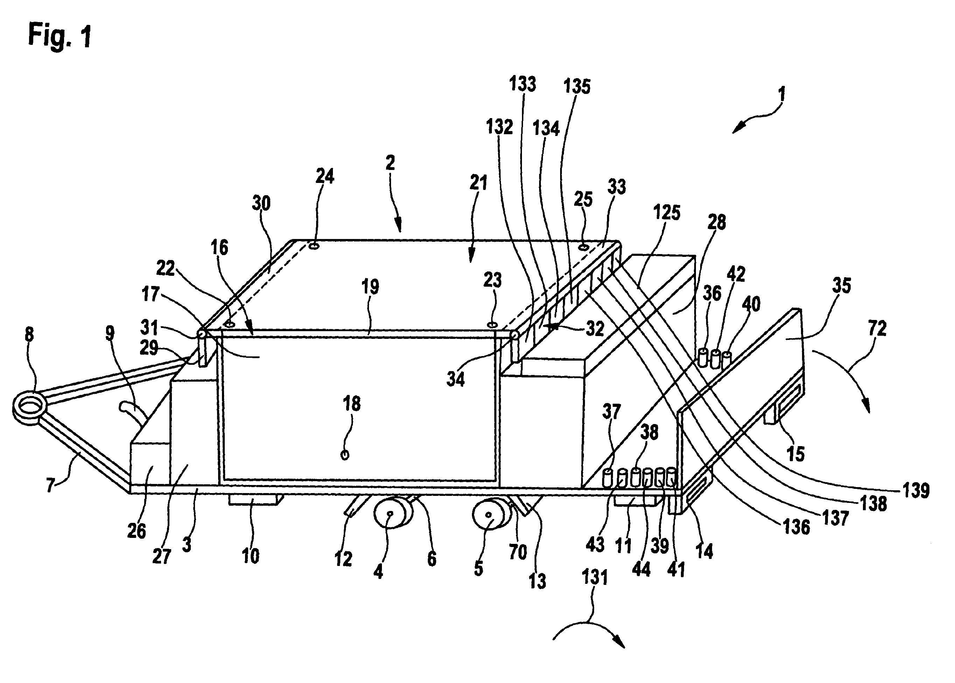

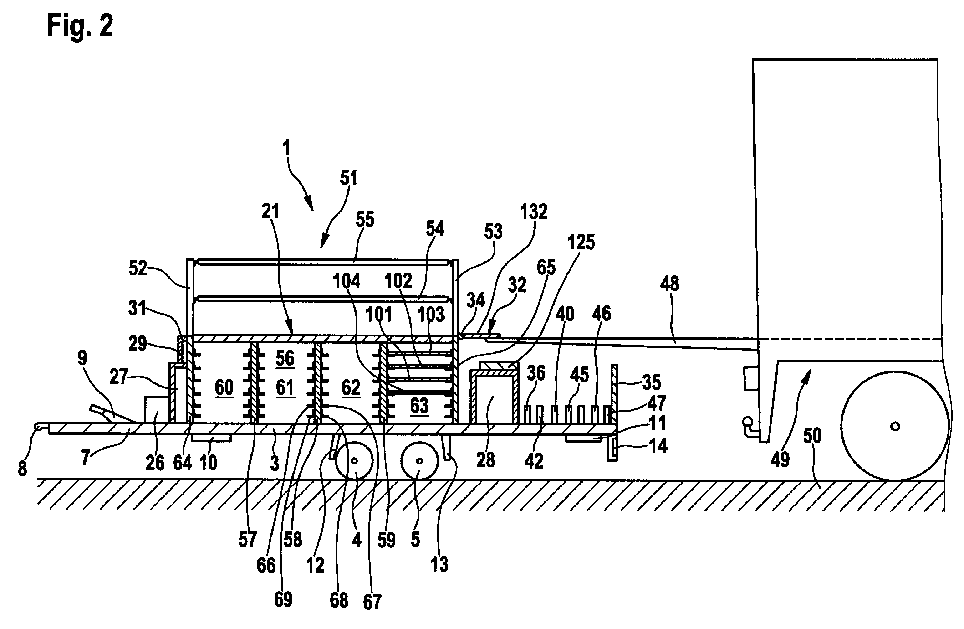

Figur 1 zeigt eine bewegbare Be- und Entladerampe 1 mit einer Rampenbasis 2, die auf einem Gestell 3 angeordnet ist. An dem Gestell 3 sind mehrere Räder angeordnet, von denen zwei Räder 4, 5 zu erkennen sind. Diesen beiden Rädern 4, 5 liegen zwei in der Figur 1 nicht zu erkennende Räder gegenüber, die jeweils über eine Achse 6, 70 miteinander verbunden sind. Somit weist die bewegbare Be- und Entladerampe 1 zwei Achsen auf. Es versteht sich, dass die bewegbare Be- und Entladerampe 1, je nach Gesamtgewicht der bewegbaren Be- und Entladerampe 1, nur eine oder aber auch mehr als zwei Achsen aufweisen kann. An dem einen Ende des Gestells 3 ist eine Anhängerdeichsel 7 mit einer daran angeordneten Anhängerkupplung 8 angeordnet. In Figur 1 ist ferner eine Feststellbremse 9 zu erkennen, die an dem Gestell 3 angeordnet ist. Am unteren Teil des Gestells 3 sind ferner Stützfüße angeordnet, wobei nur die Stützfüße 10, 11 zu erkennen sind. Auch zu erkennen sind zwei Abschirmvorrichtungen 12, 13, die zum Beispiel in Form von Abschirmblechen am unteren Teil des Gestells 3 angeordnet sein können. Des Weiteren ist am unteren Teil des Gestells 3 eine Lichtanlage, bestehend aus zwei Rückleuchten 14, 15, angeordnet. Die Rampenbasis 2 ist kastenförmig aufgebaut und weist an den beiden Seiten jeweils eine Tür auf. In Figur 1 ist nur die Seite 16 mit der Tür 17, die ein Schloss 18 aufweist, zu erkennen. Die Tür 17 kann dabei entweder vollständig von der Seite 16 der Rampenbasis 2 entfernt werden oder nach oben hin aufklappbar sein. Diese Tür 17 kann als Brücke 17 eingesetzt werden, wie später noch erläutert wird. Auf der Oberseite 21 der Rampenbasis 2 sind vier Öffnungen 22 bis 25 angeordnet. In diese Öffnungen 22 und 23 sowie 24 und 25 kann jeweils ein Geländerlauf angebracht werden. Ein Geländerlauf ist jedoch in Figur 1 nicht dargestellt. Ist die bewegbare Be- und Entladerampe 1 nicht im Einsatz, so können die Öffnungen 22 bis 25 mittels Stopfen, die hier jedoch nicht dargestellt sind, verschlossen werden. Neben der Rampenbasis 2 sind mehrere Kästen 26, 27 und 28 zu erkennen, die auf dem Gestell 3 angeordnet sind. Bei dem Kasten 26 handelt es sich um einen wasserdichten Batteriekasten, in dem mindestens eine Batterie, ein dafür vorgesehenes Ladegerät sowie ein Spannungswandler aufbewahrt werden können. Mit diesen Batterien können Begrenzungsleuchten oder gar Scheinwerfer betrieben werden, die ebenfalls in dem Kasten 26 aufbewahrt werden können. Somit ist es möglich, auch bei vollkommener Dunkelheit die bewegbare Be- und Entladerampe 1 aufzubauen. Zwischen dem Batteriekasten 26 und der Rampenbasis 2 ist ein weiterer Kasten 27 angeordnet. Oberhalb dieses Kastens 27 ist ein Auffahrblech 29 an einem verlängerten Abschnitt 30 der Oberseite 21 der Rampenbasis 2 angeordnet. Dieses Auffahrblech 29 ist über ein Scharnier 31 beweglich mit der Oberseite 21 verbunden. Oberhalb des Kastens 28 ist ein weiteres Auffahrblech 32 zu erkennen, das ebenfalls beweglich mit einem verlängerten Abschnitt 33 der Oberseite 21 verbunden ist. Dabei kann das Auffahrblech 32 ebenfalls über ein Scharnier 34 mit dem verlängerten Abschnitt 33 verbunden sein. Zwischen dem Kasten 28 und einer Wand 35 befinden sich mehrere Rohrstümpfe. In Figur 1 sind dabei nur die Rohrstümpfe 36 bis 44 zu erkennen. Auf diese Rohrstümpfe 36 bis 44 können in Figur 1 nicht dargestellte Modulbrückenverbinder aufgesteckt werden. Somit dienen die Rohrstümpfe 36 bis 44 als Lagerstätte für Modulbrückenverbinder. Die Wand 35 kann dabei auch als schwenkbare Ladeklappe ausgebildet sein, die sich in Richtung des Pfeils 72, das heißt um 180° in Richtung des Bodens 50 (Fig. 2) bewegen lässt. Obwohl in Figur 1 nicht dargestellt, können zwischen dem Kasten 28 und der Wand 35 zwei Seitenwände angeordnet werden.

Wie in Figur 1 zu erkennen, ist das Auffahrblech 32 zwischen einem Deckel 125 des Kastens 28 angeordnet, wodurch das Auffahrblech 32 zwischen der Rampenbasis 2 und dem Deckel 125 eingeklemmt ist. Ein Ausschwenken des Auffahrblechs 32 während der Bewegung der Be- und Entladerampe 1 ist somit nicht möglich. In diesem Fall ist der Deckel 125 nach hinten, das heißt in Richtung des Pfeils 131 zu öffnen. Zusätzlich kann jedoch das Auffahrblech 32 mit in Figur 1 nicht dargestellten Fixierelementen an der Rampenbasis 2 angeordnet werden. Wie in Figur 1 zu sehen, ist das Auffahrblech 29 hingegen nicht zwischen einem Deckel des Kastens 27 und der Rampenbasis 2 eingeklemmt, obwohl dies grundsätzlich möglich ist. Um jedoch ein Ausschwenken des Auffahrblechs 29 während der Bewegung beziehungsweise der Fahrt der Be- und Entladerampe 1 zu verhindern, ist das Auffahrblech 29 mittels Fixierelementen an der Rampenbasis 2 fixiert. Solche Fixierelemente sind jedoch in Figur 1 nicht dargestellt. Es ist jedoch auch möglich, die Auffahrbleche 29, 32 etwas länger auszubilden, so dass diese mit der Oberseite der Kästen 27, 28 in Kontakt stehen. In diesem Fall ist die Oberseite der Kästen 27, 28 mit Gummi ausgestattet. Dadurch können die Auffahrbleche 29, 32 zwischen den verlängerten Abschnitten 30, 33 eingeklemmt und so fixiert werden.

Obwohl das Auffahrblech 32 auch einteilig ausgebildet sein kann, besteht das Auffahrblech 32 vorzugsweise aus mehreren Abschnitten 132 bis 139, die an dem Scharnier 34 angeordnet sind und unabhängig voneinander bewegt werden können. Vorteilhaft ist dabei, dass mit dem Auffahrblech 32 ein Schräggefälle ausgeglichen werden kann, da die einzelnen Abschnitte 132 bis 139 unabhängig voneinander bewegt werden können. Dies ist insbesondere dann von Vorteil, wenn die Be- und Entladerampe 1 auf unebenem Gelände steht. Es versteht sich, dass auch das Auffahrblech 29 aus mehreren Abschnitten bestehen kann.

In Figur 2 ist ein Schnitt durch die bewegbare Be- und Entladerampe 1 gemäß Figur 1 zu erkennen. Die Rampenbasis 2 ist über das Auffahrblech 32 mit einer Rampe 48 eines Lastwagens 49 verbunden. In Figur 2 ist nur der Abschnitt 132 des mehrteilig aufgebauten Auffahrblechs 32 zu erkennen. Besteht das Auffahrblech 32 aus mehreren an dem Scharnier 34 angeordneten Abschnitten, so besteht der Vorteil darin, dass ein Schräggefälle ausgeglichen werden kann. Damit kann die Be- und Entladerampe auch auf unebenem Gelände aufgebaut sein.

Mit der in Figur 2 der zweiten Anordnung ist es möglich, Gerätschaften von dem Lastwagen 49 über die Rampe 48 auf die Rampenbasis 2 zu bewegen. Die Wand 35 sowie der Kasten 28 sind dabei ausreichend von der Rampe 48 beabstandet, so dass auch bei starker Belastung der Rampe 48 die Rampe 48 nicht mit dem Kasten 28 oder der Wand 35 in Kontakt kommt. Eine Beschädigung des Kastens 28 unter der Wand 35 ist somit ausgeschlossen. Das Auffahrblech 32 ist dabei im Wesentlichen parallel zum Boden 50, das heißt in einer waagerechten Position, ausgerichtet. Das Auffahrblech 32 kann mittels in Figur 2 nicht dargestellten Einrastelementen in dieser waagerechten Position gehalten werden. Wie das Auffahrblech 32 kann auch das Auffahrblech 29 solche Einrastelemente aufweisen. Das Auffahrblech 32 dient somit, ebenso wie das Auffahrblech 29, als eine Brücke.

Zwischen dem Kasten 28 unter Wand 35 der bewegbaren Be- und Entladerampe 1 sind die Rohrstümpfe 36, 40, 42, 45 bis 47 angeordnet. Auf der Rampenbasis 2 ist ein Geländerlauf 51 zu erkennen, der mit seinen beiden Geländerpfosten 52, 53 in der Rampenbasis 2 angeordnet ist. Die beiden Geländerpfosten 52, 53 sind über zwei Stangen 54, 55 miteinander verbunden. Im Innenraum 56 der Rampenbasis 2 sind mehrere Zwischenwände 57 bis 59 angeordnet, die den Innenraum 56 in mehrere Zwischenräume 60 bis 63 unterteilen. Die Zwischenwände 57 bis 59 sowie die äußeren Wände 64, 65 weisen mehrere Lagerwinkel 66 bis 69 auf, auf denen Module 100 bis 103 angeordnet werden können. Die Wände 64, 65 sowie die Zwischenwände 57 bis 59 mit den Lagerwinkeln 66 bis 68 dienen somit als Tragrahmen für Module. In dem Innenraum 56 der Rampenbasis 2 werden somit die Module gelagert, mit denen eine Rampe aufgebaut werden kann.

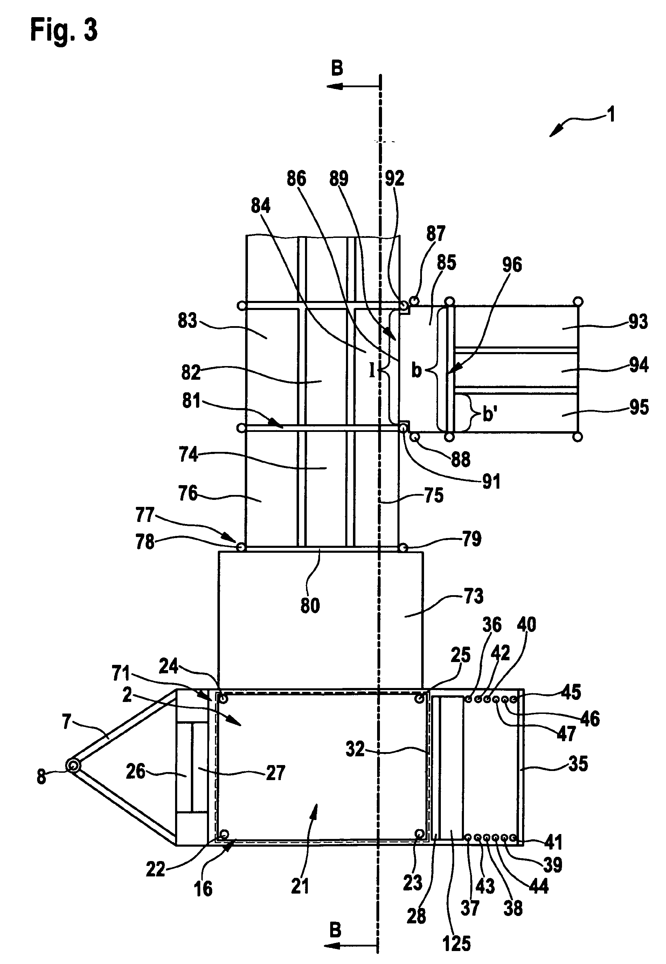

Figur 3 zeigt eine Draufsicht auf die Be- und Entladerampe 1 im aufgebauten Zustand gemäß Figur 2. Der Lastwagen 49 mit seiner Rampe 48 ist der Übersicht halber nicht dargestellt. In Figur 3 sind der Kasten 28 und die Wand 35 zu erkennen, zwischen denen die Rohrstümpfe 36 bis 47 angeordnet sind. Zudem ist die Oberseite 21 der Rampenbasis 2 zu sehen. Ein Geländerlauf ist in Figur 3 nicht dargestellt, weshalb in Figur 3 die Öffnungen 22 bis 25 zu erkennen sind, in die Posten eines Geländerlaufs eingebracht werden können. An einer Seite 71 der Rampenbasis 2 ist eine Brücke 73 zu erkennen, die die Rampenbasis 2 mit drei Modulen 74 bis 76 verbindet. Diese Brücke 73 sowie die Module 74 bis 76 liegen dabei mit ihrer Unterseite teilweise auf einem Modulbrückenverbinder 77 auf. Dieser Modulbrückenverbinder 77 wird von zwei Pfosten 78, 79 und einem Doppelrohrsystems eines Aufnahmerahmen 80, der die beiden Pfosten 78, 79 miteinander verbindet, gebildet. Das Doppelrohrsystem ist der Übersicht halber jedoch nicht dargestellt. Die Module 74 bis 76 sowie die Brücke 73 liegen zumindest teilweise auf dem Doppelrohrsystem des Aufnahmerahmens 80 auf. Die Module 74 bis 76 sind dabei lösbar auf dem Aufnahmerahmen 80 angeordnet. Es versteht sich, dass anstelle von drei Modulen 74 bis 76 beispielsweise auch nur ein Modul verwendet werden kann, welches eine Größe aufweist, die ungefähr der Größe der drei Module 74 bis 76 entspricht. Die drei Module 74 bis 76 sind über einen weiteren Modulbrückenverbinder 81 mit drei weiteren Modulen 82 bis 84 verbunden. Diese Module 82 bis 84 haben vorzugsweise die gleiche Größe wie die Module 74 bis 76. Zu erkennen ist zudem eine Brücke 85, die mit dem Modul 84 verbunden ist. Die Brücke 85 und das Modul 84 sind dabei zumindest teilweise auf einer Auflagevorrichtung 86 eines Modulbrückenverbinders 89 angeordnet. Diese Auflagevorrichtung 86 verbindet zwei Pfosten 87, 88 miteinander. Der Modulbrückenverbinder 89 besteht somit aus der Auflagevorrichtung 86 sowie den beiden Pfosten 87, 88.

An der Brücke 85 sind drei weitere Module 93 bis 95 angeordnet, wobei die Brücke 85 und die Module 93 bis 95 zumindest teilweise auf einem Modulbrückenverbinder 96 angeordnet sind. Wie in Figur 3 zu erkennen, ist es mit dieser bewegbaren Be- und Entladerampe 1 möglich, über Brücken 85, die seitlich an ein Modul 84 angeordnet werden, ein verzweigtes Wegesystem aufzubauen. Die Brücke 85 und das Modul 84 werden dabei mittels einer hier nicht dargestellten Lagefixierung miteinander verbunden. Vorzugsweise entspricht die Länge 1 eines Moduls dabei der Breite b einer Brücke. Die Breite b' eines Moduls entspricht wiederum 1/3 der Breite b einer Brücke. Obwohl in Figur 3 nicht dargestellt, so versteht es sich, dass auch an das Modul 83 eine Brücke herangeführt werden kann, um eine weitere Abzweigung zu schaffen. Auch ist es möglich, die mittleren Module 74, 82, 94 fortzulassen. Damit wird durch die äußeren Module 75, 76; 83, 84; 95, 93 eine Spur gebildet, auf denen ein Fahrzeug bewegt werden kann. Damit ist auch klar, dass die äußeren Module 75, 76; 83, 84; 95, 93 auch eine größere Breite aufweisen können, womit eine breitere Spur gehalten wird.

Für einen Fachmann ist klar, dass anstelle von drei Modulen auch nur ein Modul verwendet werden kann, das die Größe dieser drei Module aufweisen kann. In diesem Fall hat das Modul vorzugsweise eine quadratische Form.

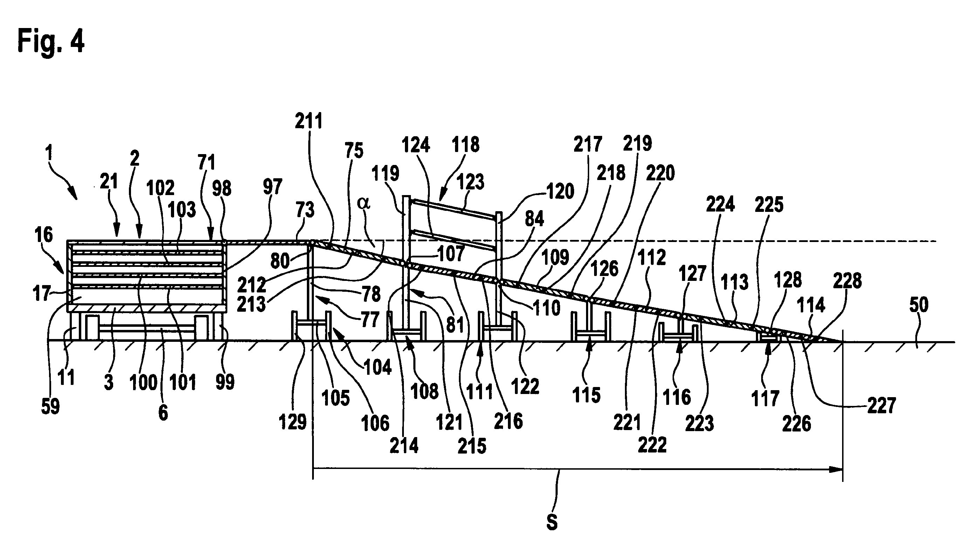

In Figur 4 ist die bewegbare Be- und Entladerampe 1 gemäß Figur 3 nach Schnitt entlang B-B dargestellt. Die Brücke 85 sowie die Module 93 bis 95 sind deshalb in Figur 4 nicht zu sehen. Zu sehen sind die Module 100 bis 103, die an der Zwischenwand 59 angeordnet sind. Die an der Zwischenwand 59 angeordneten Lagerwinkel sind der Übersicht halber nicht dargestellt. Zu erkennen sind ferner Stützfüße 11, 99, die an dem Gestell 3 angeordnet und ausgeklappt sind, so dass diese mit dem Boden 50 in Kontakt stehen. Die Tür 73 ist hochgeklappt und bildet somit eine Brücke 73, wodurch der Wandabschnitt 97 der Rampenbasis 2 zu erkennen ist. Die an der Seite 16 der Rampenbasis 2 angeordnete Tür 17 ist verschlossen. Die Rampenbasis 2 ist über die Brücke 73 mit dem Modul 75 verbunden. Dabei liegen sowohl das Modul 75 als auch die Brücke 73 zumindest teilweise auf dem Aufnahmerahmen 80 des Modulbrückenverbinders 77 auf. Ferner ist der Pfosten 78 des Modulbrückenverbinders 77 gezeigt, an dessen Unterseite ein Stützfuß 104 angeordnet ist. Dieser Stützfuß 104 weist eine Verstrebung 105 auf, die zwei Füße 106 und 129 miteinander verbindet. Das Modul 75 ist über den Modulbrückenverbinder 81 mit dem benachbarten Modul 84 verbunden. Dabei liegen die Module 75, 84 zumindest teilweise auf einem Aufnahmerahmen 107 des Modulbrückenverbinders 81 auf. Auch der Modulbrückenverbinder 81 weist einen Stützfuß 108 auf. Das Modul 84 liegt zusammen mit einem weiteren Modul 109 auf einem Aufnahmerahmen 110 eines Modulbrückenverbinders 111 auf. An das Modul 109 schließen sich weitere Module 112 bis 114 an, die jeweils zumindest teilweise auf den Modulbrückenverbindern 115 bis 117 aufliegen. Das Modul 114 steht dabei mit dem Boden 50 in Kontakt und bildet das Endmodul 114. Wie in Figur 4 zu erkennen, haben die Modulbrückenverbinder 77, 81, 111, 115 bis 117 verschiedene Höhen. Diese Höhen können dadurch eingestellt werden, dass die Pfosten der Modulbrückenverbinder 77, 81, 111, 115 bis 117 teleskopisch ineinander geschoben werden. Dadurch kann der Aufnahmerahmen eines jeden Modulbrückenverbinders in die gewünschte Höhe gebracht werden. Somit kann auch der Winkel □, das heißt das Gefälle der Strecke S, eingestellt werden. Bei der Strecke S handelt es sich um die Strecke von der Oberseite 21 der Rampenbasis 2 bis hin zum letzten Modul 114. Damit sind zwischen der Rampenbasis 2 und der daran angeordneten Brücke 73 sechs Module 75, 84, 109, 112 bis 114 angeordnet. Soll der Winkel □kleiner werden, das heißt, dass ein kleineres Gefälle gewünscht wird, so können zwischen der Brücke 73 und dem Endmodul 114 weitere Module angeordnet werden. Das Endmodul 114 steht mit dem Boden 50 in Kontakt. Allgemein formuliert können somit für eine Strecke S an die Brücke 73 der Rampenbasis n Module angeordnet werden, wobei mindestens eines dieser Module ein Endmodul 114 ist. Somit sind zwischen der Rampenbasis 2 und dem Endmodul 114 n-1 Module angeordnet, wobei zwischen den n Modulen und der Rampenbasis 2 eine Brücke 73 angeordnet ist. Die Module 74 bis 76, 82 bis 84, 93 bis 95, 109, 112 bis 114 sind dabei zumindest teilweise mit ihren beiden Enden jeweils auf den Aufnahmerahmen 80, 107, 110, 126 bis 128 der Modulbrückenverbinder 77, 81, 111, 115 bis 117 angeordnet. Lediglich das Endmodul 114 ist nur mit einem seiner Enden auf einem Aufnahmerahmen 128 angeordnet, da es mit seinem anderen Ende auf dem Boden 50 aufliegt. Somit liegt ein jedes der Module 74 bis 76, 82 bis 84, 93 bis 95, 109, 112 bis 114 auf zumindest einem Aufnahmerahmen 80, 107, 110, 126 bis 128 der Modulbrückenverbinder 77, 81, 111, 115 bis 117. Das Endmodul 114 kann nicht nur auf dem Boden 50, sondern auf jeder oberhalb des Bodens 50 angeordneten Ebene angeordnet sein. So ist es z. B. möglich, das Endmodul 114 auf einer oberen Stufe einer Treppe eines Hauseingangs anzuordnen.

Zwischen dem Modulbrückenverbinder 81 und dem Modulbrückenverbinder 111 ist ein Geländerlauf 118 angeordnet. Dieser Geländerlauf 118 ist über zwei Pfosten 119, 120 auf den Aufnahmerahmen 107 beziehungsweise 110 der Modulbrückenverbinder 81 beziehungsweise 111 angeordnet. Dafür weisen die Modulbrückenverbinder 81, 111 in ihren Pfosten 121, 122 Öffnungen auf, in die Geländerpfosten 119, 120 des Geländerlaufs 118 eingebracht werden können. Die Öffnungen sind in Figur 4 der Übersicht halber nicht dargestellt. Der Geländerlauf 118 wird somit in die Öffnungen der Pfosten 121, 122 eingesteckt. Zwischen den beiden Geländerpfosten 119, 120 des Geländerlaufs 118 sind zwei Stangen 123 und 124 angeordnet.

Die Stützfüße 104, 108, die Geländerpfosten 119, 120 sowie der Stangen 123, 124 des Geländerlaufs 118 können dabei in dem Kasten 28 verstaut werden. Der Kasten 28 ist jedoch in Figur 4 nicht zu sehen.

Die Brücken der Rampenbasis 2 bestehen dabei vorzugsweise aus demselben Material wie die Module. Das letzte Modul 114 kann jedoch auch aus demselben Material wie die Oberseite 21 der Rampenbasis 2 bestehen. Bevorzugt wird als Material für die Oberseite der Rampenbasis 2 Tränenblech oder Siebdruckplatten verwendet. Als Material kann aber auch "Safty-Walk" der Firma 3M, 41453 Neuss, Deutschland, verwendet werden.

Es ist somit möglich, durch Anbringen von zwei Brücken an den Seiten 16, 71 der Rampenbasis 2 sowie durch das Vorhandensein der beiden Auffahrbleche 29, 32 eine Station zu schaffen, von der Gerätschaften oder Fahrzeuge in vier verschiedene Richtungen bewegt werden können. Auch ist es möglich, mehrere bewegbare Be- und Entladerampen über Brücken oder Module direkt miteinander zu verbinden. Über die Anzahl der Module kann der Abstand zwischen den jeweiligen bewegbaren Be- und Entladerampen variiert werden.

In Figur 4 ist zu erkennen, dass die Module 75, 84, 109, 112, 113, 114 jeweils drei Öffnungen 211 bis 213; 214 bis 216; 217 bis 219; 220 bis 222; 223 bis 225 sowie 226 bis 228 aufweisen. Diese Öffnungen verlaufen in Richtung B. Wie die Module 75, 84, 109, 112, 113, 114 weisen auch die benachbarten Module solche Öffnungen auf, die ebenfalls in Richtung B verlaufen. Durch diese Öffnungen können Verbindungswellen gesteckt und an den Modulen fixiert werden. Damit können die Module fest miteinander verbunden werden. Anstelle von drei Öffnungen können die Module auch weniger als drei oder aber mehr als drei Öffnungen aufweisen.

Die Be- und Entladerampe 1 ist somit nicht nur als Verladerampe, sondern auch als Laufsteg oder als Behindertenrampe bei Veranstaltungen zu verwenden, da es auch möglich ist, die Module auf einer Ebene, das heißt ohne ein Gefälle, anzuordnen.

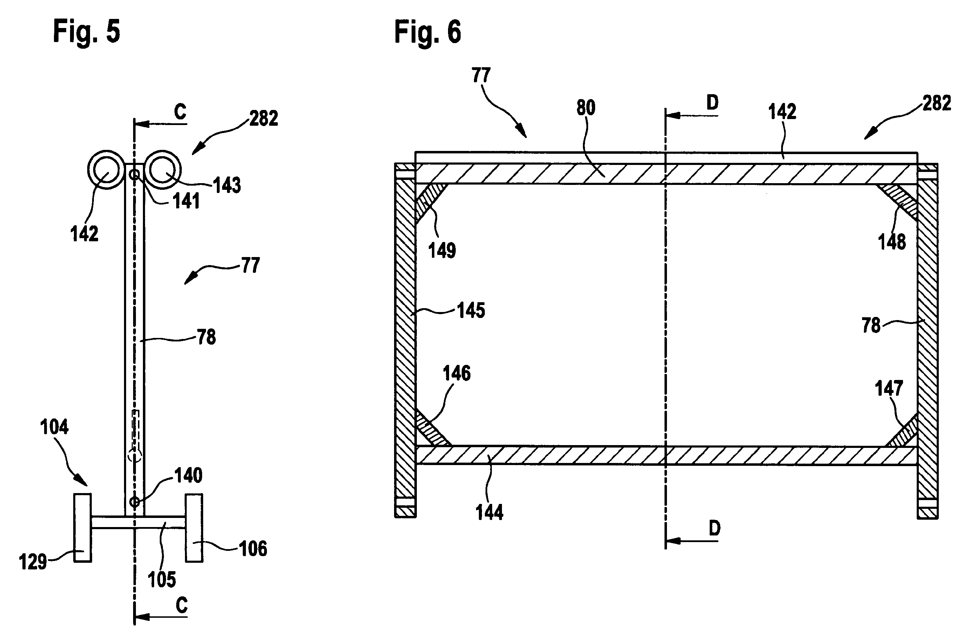

In Figur 5 ist der Modulbrückenverbinder 77 gemäß Figur 4 dargestellt, an dessen Unterseite der Stützfuß 104 angeordnet ist. Zu erkennen sind wiederum die beiden Füße 106, 129, die über eine Verstrebung 105 miteinander verbunden sind. Der Pfosten 78 des Modulbrückenverbinders 77 ist dabei auf den Stützfuß 104 aufgesteckt. Der Pfosten 78 weist zudem an seinem unteren Ende eine Öffnung 140 auf, durch die ein Verbindungselement gesteckt werden kann, um den Stützfuß 104 mit dem Pfosten 78 zu verbinden. Ein Verbindungselement ist jedoch in Figur 5 nicht dargestellt. Zu erkennen sind auch zwei rohrförmig ausgebildete Balken 142, 143, auf denen ein Modul oder eine Brücke angeordnet werden können. Diese beiden Balken 142, 143 sind als Rohre 142, 143 ausgebildet und bilden ein Doppelrohrsystem 282. Eine Brücke oder ein Modul ist in Figur 5 jedoch nicht dargestellt. Diese Rohre 142, 143 sind über den in Figur 5 nicht zu sehenden Aufnahmerahmen 80 miteinander verbunden. Die Rohre 142, 143 können dabei beispielsweise aus Aluminium oder Stahl bestehen. Der Pfosten 78 weist an seinem oberen Ende eine Öffnung 141 auf, die ein in Figur 5 nicht dargestelltes Verbindungselement aufnehmen kann. Mit diesem Verbindungselement ist es möglich, den Pfosten 78 mit dem Aufnahmerahmen 80 zu verbinden. Der Pfosten 78 kann aber auch mit dem Aufnahmerahmen 80 verschweißt sein.

In Figur 6 ist der Modulbrückenverbinder 77 nach Schnitt entlang C-C ohne Stützfuß 104 dargestellt. Zu erkennen ist wiederum der Pfosten 78, der über den Aufnahmerahmen 80 sowie eine Verstrebung 144 mit einem weiteren Pfosten 145 verbunden ist. Das Rohr 142 ist in dieser Ansicht hinter dem Aufnahmerahmen 80 angeordnet, so dass dieses Rohr 142 nur teilweise zu sehen ist. Die Pfosten 78 und 145 sind über Knotenbleche 146 bis 149 mit der Verstrebung 144 beziehungsweise dem Aufnahmerahmen 80 verbunden. Durch diese Knotenbleche 146 bis 149 ist der Modulbrückenverbinder 77 sehr stabil und kann hohen Belastungen standhalten.

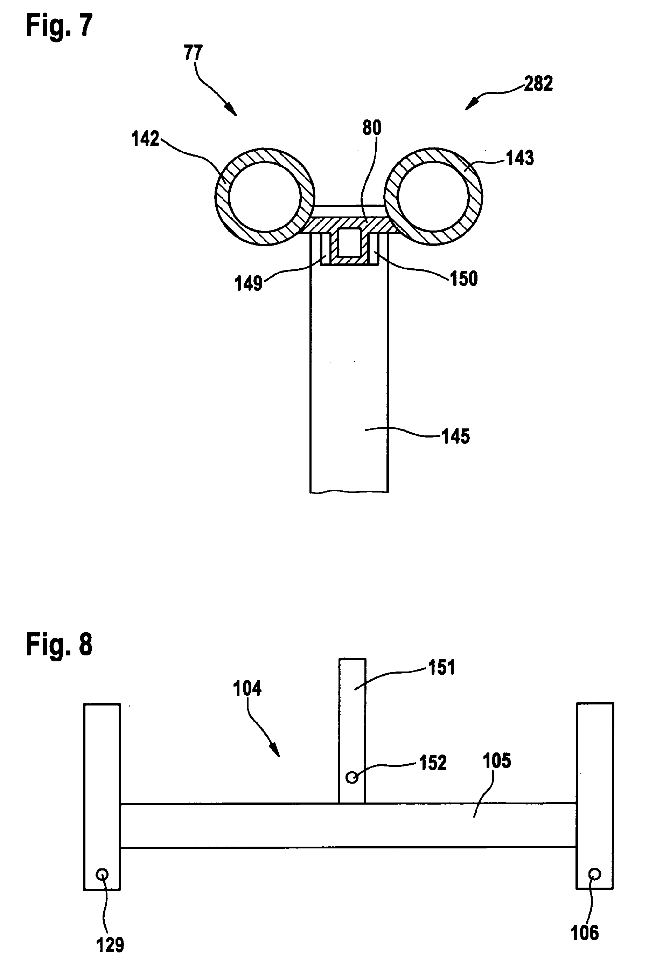

Figur 7 zeigt einen Ausschnitt des oberen Abschnitts des Modulbrückenverbinders 77 nach Schnitt D-D. An dem Pfosten 145 ist der Aufnahmerahmen 80 mit den beiden Rohren 142, 143 angeordnet. An dem Aufnahmerahmen 80 sind zwei Knotenbleche 149, 150 angeordnet, die den Modulbrückenverbinder 77 stabilisieren.

In Figur 8 ist der Stützfuß 104 mit seinen beiden Füßen 129, 106 gezeigt, die über die Verstrebung 105 miteinander verbunden sind. An der Verstrebung 105 ist ein Aufsatz 151 zu erkennen, der eine Öffnung 152 aufweist. Auf diesen Aufsatz 151 kann der Pfosten 78 aufgesteckt und mittels eines Verbindungselementes mit dem Aufsatz 151 verbunden werden. Dazu wird das in Figur 8 nicht dargestellte Verbindungselement sowohl durch die Öffnung 140 des Pfostens 78 als auch durch die Öffnung 152 des Aufsatzes 151 gesteckt. Der Pfosten 78 ist in Figur 8 jedoch nicht dargestellt.

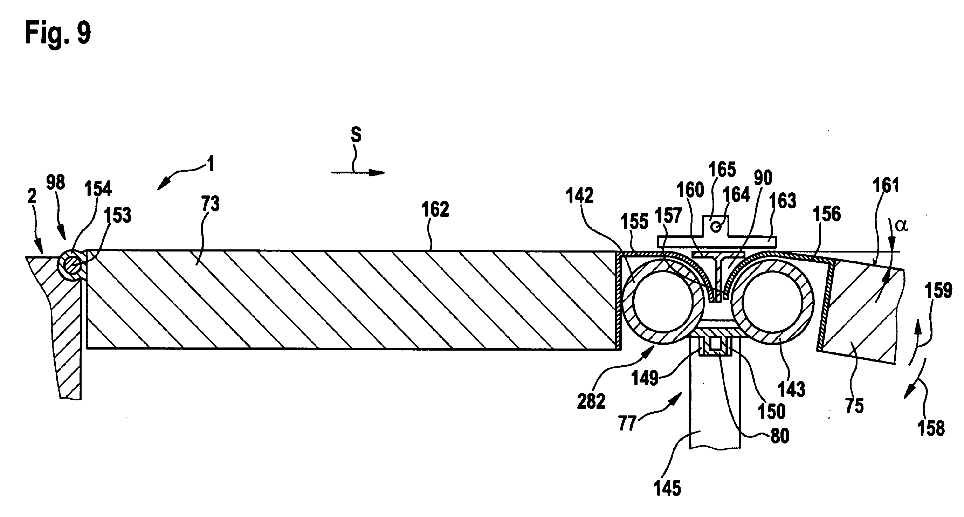

Figur 9 zeigt einen vergrößerten Ausschnitt der in Figur 4 dargestellten Be- und Entladerampe 1, an der über das Scharnier 98 die Brücke 73 angeordnet ist. Das Scharnier 98 besteht dabei aus einer Scharnierwelle 153 und einer Scharnieröse 154. An der dem Scharnier 98 gegenüberliegenden Seite der Brücke 73 ist ein Auflageprofil 155 angeordnet. Dieses Auflageprofil 155 umgibt das Rohr 142 des Modulbrückenverbinders 77 zumindest teilweise. Zu erkennen ist auch das Modul 75, das ebenfalls ein Auflageprofil 156 aufweist, das zumindest teilweise das Rohr 143 des Modulbrückenverbinders 77 umgibt. Das Modul 75 ist dabei in Bezug auf die Strecke S in einem Winkel □angeordnet. Da das Ende 157 des Auflageprofils 156 des Moduls 75 dem Rohr 143 angepasst ist, kann das Gefälle leicht variiert werden, indem das Modul 75 in Richtung der Pfeile 158, 159 bewegt wird. Durch Bewegen des Moduls 75 in Richtung der Pfeile 158 beziehungsweise 159 kann somit der Winkel □variiert werden. Des Weiteren ist in Figur 9 zu sehen, dass zwischen den beiden Auflageprofilen 155 und 156 ein Überbrückungsstück 160 angeordnet ist. Dieses Überbrückungsstück 160 hat vorzugsweise die Form eines "T", obwohl auch andere Formen denkbar sind. Dieses T-förmige Überbrückungsstück 160 schließt bündig mit den beiden Oberflächen 161, 162 des Moduls 75 beziehungsweise der Brücke 73 ab. Dadurch kann die befahrbare Be- und Entladerampe 1 auch mit Fahrzeugen oder Gerätschaften befahren werden, die nur kleine Räder aufweisen, da kleine Räder nicht in der zwischen den Auflageprofilen 155, 156 angeordneten Lücke 90 hängen bleiben. Das Überbrückungsstück 160 wird durch eine Aushebesicherung 163 lagefixiert. Diese Aushebesicherung 163 weist eine Öffnung 164 auf, die in einem Aufsatz 165 der Aushebesicherung 163 angeordnet ist. Dabei dient die Aushebesicherung 163 auch als Drehpunkt. Die Aushebesicherung 163 ist dabei an einem in Figur 9 nicht dargestellten Geländerpfosten angeordnet. Über Verbindungselemente kann der Geländerpfosten mit der Aushebesicherung 163 fixiert werden. Dies ist in Figur 9 jedoch nicht dargestellt.

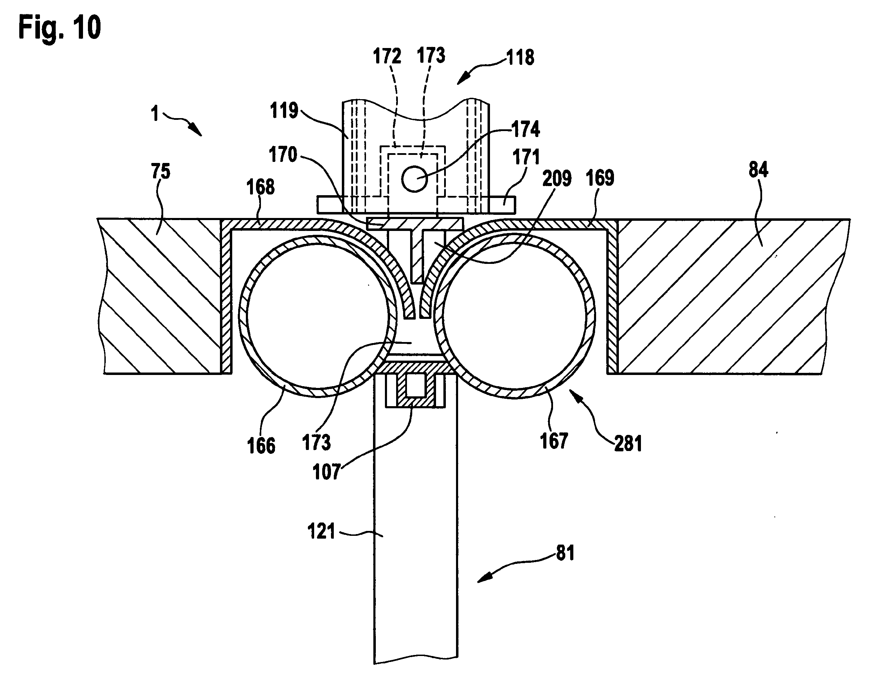

In Figur 10 ist ein weiterer vergrößerter Ausschnitt der Be- und Entladerampe 1 gemäß Figur 4 dargestellt. An dem Pfosten 121 des Modulbrückenverbinders 107 ist der Aufnahmerahmen 107 mit zwei Balken 166, 167 angeordnet, die als Rohre 166, 167 ausgebildet sind. Diese beiden Rohre 166 und 167 bilden ein Doppelrohrsystem 281. Über ein Auflageprofil 168 ist das Modul 75 an dem Rohr 166 angeordnet. Zu erkennen ist auch das Modul 84, das über ein Auflageprofil 169 mit dem Rohr 167 des Modulbrückenverbinders 81 verbunden ist. Zwischen den beiden Auflageprofilen 168 und 169 ist ein T-förmiges Überbrückungsstück 170 angeordnet. Durch eine Aushebesicherung 171 ist das Überbrückungsstück 170 lagefixiert. Zu erkennen ist auch ein Aufsatz 172 der Aushebesicherung 171. Ein Teil des Aufsatzes 172 der Aushebesicherung 171 ist teilweise innerhalb des Pfostens 119 des Geländerlaufs 118 angeordnet. Die in dem Pfosten 119 angeordneten Bereiche der Aushebesicherung 171 sind durch eine gestrichelte Linie dargestellt. Innerhalb der Aushebesicherung 171 ist ein stabförmiges Element 173 angeordnet. Dieses Element 173 verbindet den Geländerpfosten 119 des Geländerlaufs 118 mit dem Pfosten 121 des Modulbrückenverbinders 81. Dabei wird das Element 173 über ein Verbindungselement, das in Figur 10 nicht dargestellt ist, verbunden. Dieses Verbindungselement wird durch die Öffnung 174 des Aufsatzes 172 der Aushebesicherung 171 geführt. Das Element 173 wird dabei in den Pfosten 121 des Modulbrückenverbinders 81 eingebracht, womit der Geländerlauf 118 mit dem Modulbrückenverbinder 81 verbunden ist.

Vorteilhaft bei diesem Überbrückungsstück 170 ist, dass auch Gerätschaften mit nur kleinen Rädern, z. B. Sackkarren, problemlos über die Lücke 209 bewegt werden können, ohne dass die Räder dieser Gerätschaften in der Lücke 209 hängen bleiben. Die Aushebesicherung 171 liegt auf dem Überbrückungsstück 170 auf, womit das Überbrückungsstück 170 in der Lücke 209 lagefixiert wird. Damit kann das Überbrückungsstück 170 nicht aus der Lücke 209 heraus rutschen.

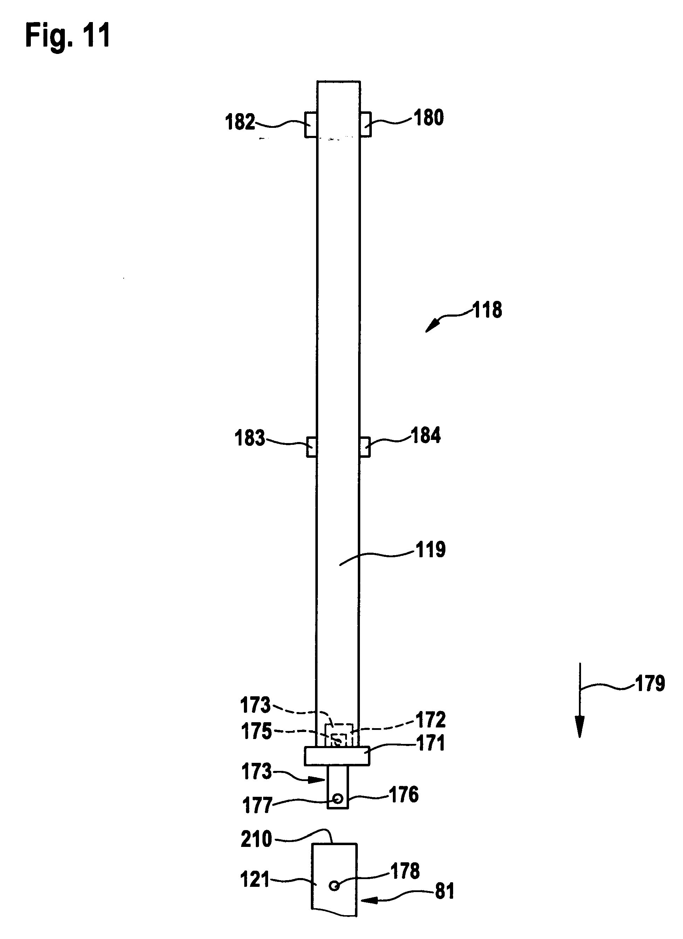

Figur 11 zeigt den Geländerpfosten 119 des Geländerlaufs 118, der auf der Aushebesicherung 171 angeordnet ist. Der Aufsatz 172 der Aushebesicherung 171 ist dabei im Inneren des Geländerpfostens 119 angeordnet, weshalb der Aufsatz 172 durch eine gestrichelte Linie gekennzeichnet ist. Zu erkennen ist auch das Element 173, das zumindest teilweise in dem Aufsatz 172 der Aushebesicherung 171 angeordnet ist. Dargestellt ist auch ein Verbindungselement 175, das den Geländerpfosten 119 mit dem Aufsatz 172 und den Aufsatz 172 mit dem Element 173 verbindet. Das Element 173 weist im unteren Bereich 176 eine Öffnung 177 auf. Das Element 173 kann an dem Pfosten 121 des Modulbrückenverbinders 81 angeordnet werden, indem das Element 173 zumindest teilweise in einer Öffnung 210 angebracht wird, die sich im oberen Bereich des Pfostens 121 befindet. Das Eindringen des Elements 173 in den Pfosten 121 geschieht durch Bewegung des Elements 173 in Richtung des Pfeils 179. Ist das Element 173 in den Pfosten 121 eingebracht worden, so befinden sich die Öffnung 177 des Elementes 173 sowie die Öffnung 178 des Pfostens 121 auf der gleichen Höhe, so dass durch diese Öffnungen 178, 177 ein Verbindungselement gesteckt werden kann. Damit kann der Pfosten 121 mit dem Element 173 fest verbunden werden. Über das Element 173 werden somit der Geländerpfosten 119 des Geländerlaufs 118 mit dem Pfosten 121 des Modulbrückenverbinders 81 verbunden. An dem Geländerpfosten 119 des Geländerlaufs 118 sind zu beiden Seiten mehrere Lagerschalen 180, 182 bis 184 zu erkennen, in denen Stangen des Geländerlaufs 118 angeordnet werden können. Diese Stangen sind jedoch in Figur 11 nicht dargestellt.

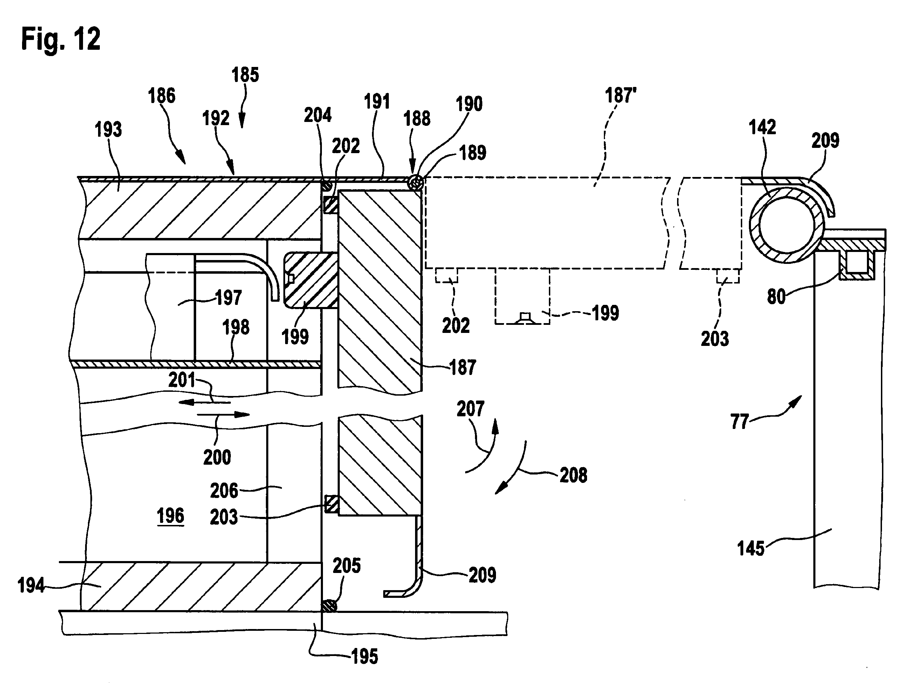

In Figur 12 ist ein Ausschnitt einer Variante der in Figur 4 dargestellten Be- und Entladerampe 1 gezeigt. Auch diese Be- und Entladerampe 185 weist eine Rampenbasis 186 mit einer Brücke 187' (gestrichelte Linien) auf, die auch als Tür 187 (durchgezogene Linien) dieser Rampenbasis 186 dient. Dabei ist die Brücke 187' beziehungsweise die Tür 187 an einem Scharnier 188, bestehend aus einer Scharnieröse 189 und einer Scharnierwelle 190, angeordnet. Dieses Scharnier 188 ist an einem verlängerten Abschnitt 191 einer Oberseite 192 der Rampenbasis 186 angeordnet. Zu erkennen sind die obere Wand 193 sowie die untere Wand 194 der Rampenbasis 186. Die untere Wand 194 ist dabei auf einem Gestell 195 angeordnet, das jedoch nur ausschnittsweise dargestellt ist. Zu erkennen ist auch der Innenraum 196 der Rampenbasis 186. In dem Innenraum 196 sind mehrere Module angeordnet, wobei in Figur 12 nun das Modul 197 zu sehen ist. Auch dieses Modul 197, das auf einem Lagerwinkel 198 gelagert ist, ist nur ausschnittsweise dargestellt. An der Tür 187 sind mehrere Kunststoffelemente angeordnet, wobei in Figur 12 Kunststoffelement 199 gezeigt ist. Dieses Kunststoffelement 199 verhindert, dass sich das Modul 197 in Richtung der Pfeile 200 beziehungsweise 201 bewegen kann. Es versteht sich, dass im Inneren 196 der Rampenbasis 186 noch weitere solcher Kunststoffelemente vorgesehen werden können, die ein Verrutschen der Module im Inneren 196 der Rampenbasis 186 verhindern.

Die Tür 187 weist zudem zwei Dämpfungselemente 202, 203 auf, die mit den Wänden 193, 206 in Kontakt stehen. Die Dämpfungselemente 202, 203 bestehen zum Beispiel aus Gummi und verhindern das Entstehen von Lärm, sollte die Tür 187 gegen die Wände 193, 206 schlagen. Fixierelemente, mit denen die Tür 187 fest an der Rampenbasis 186 angeordnet werden kann, sind in Figur 12 der Übersicht halber nicht dargestellt.

In Figur 12 sind ferner Dichtungselemente 204, 205 zu erkennen. Wird die Tür 187 in Richtung des Pfeils 207, das heißt in Richtung des Modulbrückenverbinders 77 bewegt und auf dem Rohr 142 des Aufnahmerahmens 80 angeordnet, so bildet die Tür 187 die Brücke 187'. Wird die Brücke 187' hingegen in Richtung des Pfeils 208 bewegt, bildet die Brücke 187' die Tür 187 der Rampenbasis 186.

Obwohl in Figur 12 nicht dargestellt, weist die Rampenbasis 186 ebenfalls Rohrstümpfe für das Lagern von Modulbrückenverbindern auf. Die Be- und Entladerampe 185 weist, wie auch die Be- und Entladerampe 1, Lagerräume für die Aufbewahrung von Geländerläufen und Werkzeug auf. Diese Lagerräume sind in Figur 12 jedoch nicht zu erkennen.

Im Folgenden wird die Funktionsweise der bewegbaren Be- und Entladerampe 1 erläutert. Soll zum Beispiel an einem Lastkraftwagen, der Kisten oder andere Gerätschaften auf seiner Ladefläche hat, entladen werden, so kann die bewegbare Be- und Entladerampe 1 zu diesem Lastkraftwagen bewegt werden. Diese Be- und Entladerampe 1 ist als Anhänger ausgebildet und weist deshalb eine Anhängerdeichsel 7 mit einer Anhängerkupplung 8 auf. Über diese Anhängerkupplung 8 kann die Be- und Entladerampe 1 an z. B. einen Pkw angehängt werden. Dieser Pkw kann dann die Be- und Entladerampe 1 zu dem Lastkraftwagen transportieren. Die Be- und Entladerampe 1 wird dann von dem Pkw gelöst. Weist der Lastkraftwagen 49 eine Rampe 48 auf, wie dies z. B. in Figur 2 gezeigt ist, so kann die Rampe 48 heruntergefahren werden. Nachdem die Be- und Entladerampe 1 in die richtige Position gebracht wurde, werden die Feststellbremse 9 angezogen und die Stützfüße 10 und 11 herunter geklappt. Es versteht sich, dass die Stützfüße 10, 11 in der Höhe einstellbar sind, wodurch Höhenunterschiede beziehungsweise Unebenheiten des Bodens 50 ausgeglichen werden können. Damit steht die Be- und Entladerampe 1 fest auf dem Boden. Dann wird das Auffahrblech 32 auf die Rampe 48 zumindest teilweise aufgelegt. Das Auffahrblech 32 dient somit als Übergangsstück, das es ermöglicht, ohne Probleme ein fahrbares Gerät, zum Beispiel eine Sackkarre oder einen Gabelstapler, von der Ladefläche des Lastwagens 49 auf die Rampenbasis 2 der Be- und Entladerampe 1 oder umgekehrt zu bewegen. Nachdem das Auffahrblech 32 auf die Rampe 48 gelegt wurde, kann die zumindest eine seitliche Tür 17, 73 geöffnet werden. Diese Tür 17, 73 kann entweder nach oben hin aufgeklappt werden oder komplett von der Rampenbasis 2 entfernt werden. Dadurch kann die Tür 17, 73 als Brücke eingesetzt werden. Sodann werden die Module 101 bis 104 aus der Rampenbasis 2 genommen. Mit diesen Modulen sowie den Modulbrückenverbindern, die zwischen den Rohrstümpfen 36 bis 47 gelagert sind, kann dann ein Wegesystem erstellt werden, wie dies z. B. in Figur 4 zu sehen ist. Dazu wird zuerst der Modulbrückenverbinder 77 aufgestellt. Sodann wird die Brücke 73 auf den Modulbrückenverbinder gelegt. Bei dieser Brücke 73 handelt es sich um eine Tür 73, die an der Seite 71 der Rampenbasis 2 angeordnet ist. Dazu wird die Brücke 73, die an dem Scharnier 98 angeordnet ist, hochgeklappt. Es werden dann die weiteren Modulbrückenverbinder 81, 111, 115 bis 117 aufgestellt (vergleiche Figur 4). Anschließend werden die Module 75, 84, 109, 112 bis 114 auf diesen Modulbrückenverbindern 81, 111, 115 bis 117 angeordnet. So entsteht ein erstes Wegesystem. Schließlich können noch Geländerläufe an den Modulbrückenverbindem angeordnet werden (vergleiche Geländerlauf 118 in Figur 4). Sollte es erforderlich sein, so kann auch ein verzweigtes Wegesystem bereitgestellt werden, wie dies in Figur 3 angedeutet ist. Es kann nun beispielsweise eine Person mit einer Sackkarre über die Module 75, 84, 109, 112 bis 114 und die Brücke 73 auf die Rampenbasis 2 gelangen. Von da aus kann diese Person über die Rampe 48 des Lastwagens 49 auf die Ladefläche des Lastwagens laufen. Hat diese Person die Sackkarre beladen, so kann sie mit der Sackkarre über die Rampe 48 des Lastwagens 49 auf die Rampenbasis 2 fahren. Über die Brücke 73 und die Module 75, 84, 109, 112 bis 114 kann die Person dann mit der Sackkarre wieder in Richtung des Bodens 50 gehen.

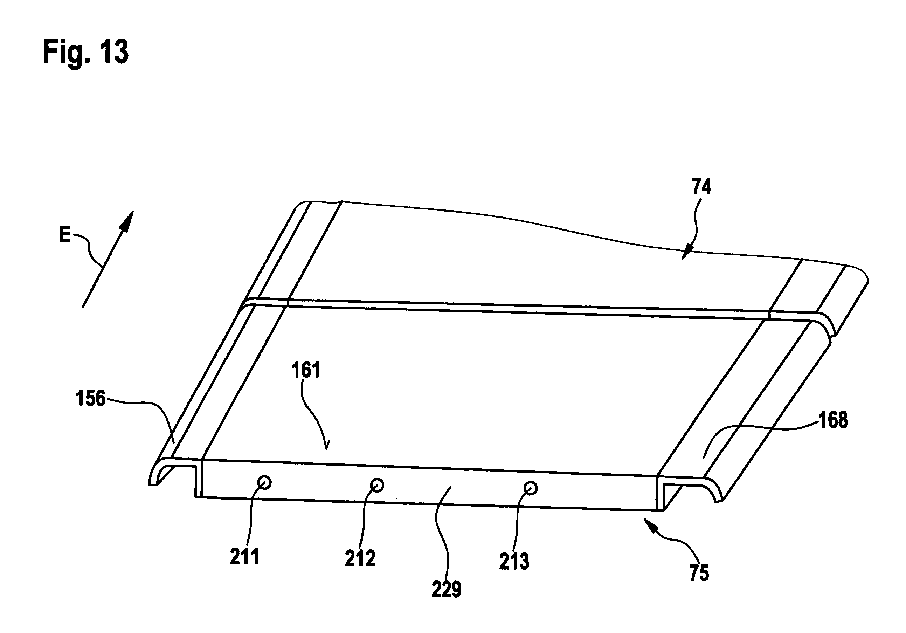

In Figur 13 ist eine perspektivische Ansicht eines in Figur 3 dargestellten Moduls der Be- und Entladerampe 1 gezeigt. Das Modul 75 mit seiner Oberfläche 161 weist zwei Auflageprofile 156, 168 auf. Diese Oberfläche 161 kann beispielsweise als Tränenblech ausgebildet sein. Dies ist der Übersicht halber jedoch nicht dargestellt. Das Modul 75 weist zwei Seitenwände auf, die zwischen den beiden Auflageprofilen 156, 168 angeordnet sind. In Figur 13 ist jedoch nur die Seitenwand 229 zu erkennen. An der Seitenwand 229 sind drei Öffnungen 211 bis 213 angeordnet, die in Richtung des Pfeils E durch das Modul 75 verlaufen. Durch diese Öffnungen 211 bis 213 kann jeweils eine Verbindungswelle eingebracht werden. Mittels dieser Verbindungswellen können die benachbarten Module mit dem Modul 75 verbunden werden. In Figur 13 ist jedoch nur ein Ausschnitt des benachbarten Moduls 74 zu erkennen.

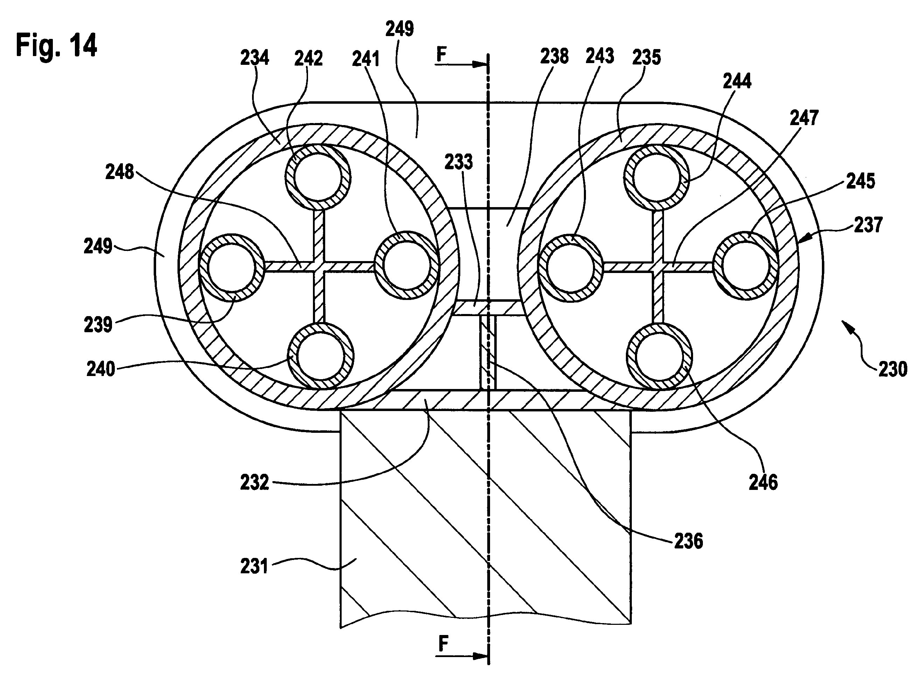

In Figur 14 ist eine Variante eines Modulbrückenverbinders 230 des in Figur 5 dargestellten Modulbrückenverbinders 77 dargestellt. Wie auch in Figur 5 ist in Figur 14 ein Schnitt durch den Modulbrückenverbinder 230 dargestellt. Auf einem Pfosten 231 des Modulbrückenverbinders 230 ruhen zwei über zwei Stege 232, 233 verbundene Balken 234, 235, die als Rohre 234, 235 ausgebildet sind. Diese Rohre 234, 235 sind mit den beiden Stegen 232, 233 verschweißt oder einteilig, falls diese Rohre 232, 233 über das Strangpressverfahren hergestellt wurden. Zwischen den beiden Stegen 232, 233 ist ein Verbindungssteg 236 angeordnet, der die beiden Stege 232, 233 miteinander verbindet und dem System Stabilität beziehungsweise Steifigkeit verleiht. Die Stege 232, 233, 236 sowie die beiden Rohre 234, 235 bilden ein Doppelrohrsystem 237. Mit dem Steg 232 ruht das Doppelrohrsystem 237 zumindest teilweise auf dem Pfosten 231. Zu erkennen ist auch ein Teil eines oberen Abschnittes 238 des Pfostens 231, der zumindest teilweise hinter den beiden Rohren 234, 235 angeordnet ist und deswegen nicht vollständig zu sehen ist. Im Inneren der Rohre 234, 235, die z. B. aus Stahl oder Aluminium bestehen können, befinden sich jeweils vier innere Rohre 239 bis 242 beziehungsweise 243 bis 246, die aus Aluminium bestehen. Im Inneren dieser Rohre 239 bis 242 beziehungsweise 243 bis 246 ist ein Gewinde angebracht, das in Figur 14 der Übersicht halber nicht dargestellt ist. Die Rohre 243 bis 246 sind fest in dem Rohr 234 und die Rohre 243 bis 246 fest in dem Rohr 235 angeordnet und über ein kreuzförmiges Stegsystem 247 beziehungsweise 248 miteinander verbunden. An dem Doppelrohrsystem 237 und dem Pfosten 231 ist ein Blech 249 zu erkennen, das an dem Doppelrohrsystem 237 und dem Pfosten 231 fest angeordnet ist. Das Blech 249 ist mit dem Pfosten 231 verschweißt und mittels Verbindungselementen, die in Figur 14 nicht dargestellt sind, mit dem Doppelrohrsystem 237 verbunden. Dazu werden die Verbindungselemente, vorzugsweise Schrauben, von außen durch das Blech 249 in die Rohre 239 bis 242 beziehungsweise 243 bis 246 eingebracht. Da diese Rohre 239 bis 242 beziehungsweise 243 bis 246 in ihrem Inneren ein Gewinde aufweisen, kann das Blech 249 fest an den beiden Rohren 234 und 235 fixiert werden. Dabei schließt das Blech 249 bündig mit den beiden Rohren 234 und 235 ab. Allerdings dienen die inneren Rohr 239 bis 242 beziehungsweise 243 bis 246 der beiden Rohre 234 beziehungsweise 235 nicht nur zum Anbringen des Blechs 249, sondern auch zur Erhöhung der Steifigkeit der Rohre 234, 235, weshalb die Rohre 239 bis 242 beziehungsweise 243 bis 246 durch die gesamte Länge der Rohre 234 beziehungsweise 235 verlaufen.

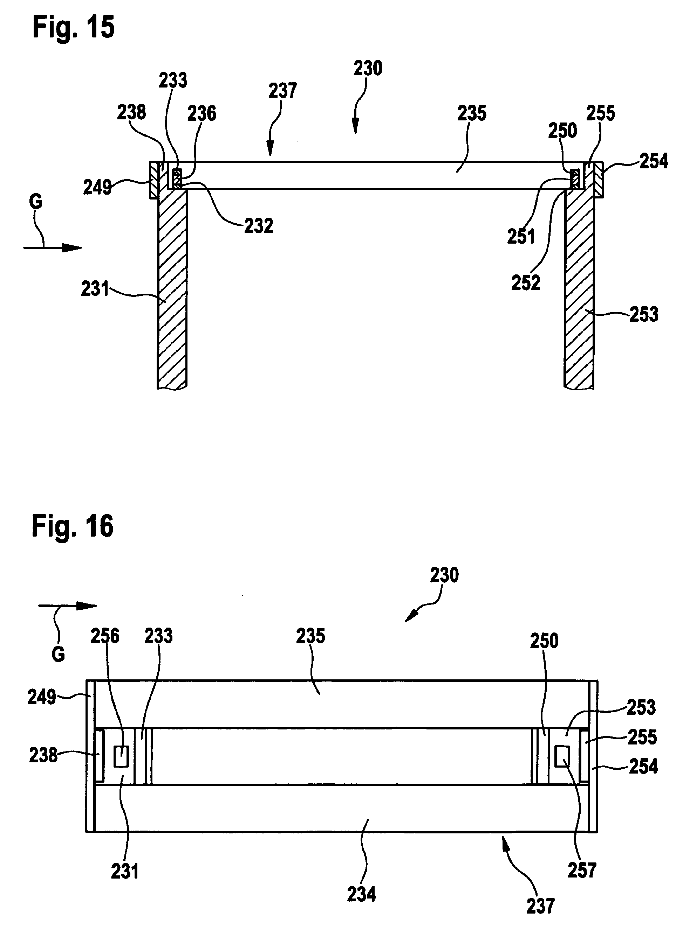

Figur 15 zeigt einen Schnitt F-F durch den in Figur 14 gezeigten Modulbrückenverbinder 230. Von dem Doppelrohrsystem 237 ist dabei lediglich das Rohr 235 zu sehen. Zu erkennen sind wiederum die Stege 232, 233 und 236, die die beiden Rohre 235 und 234 miteinander verbinden. Auf der gegenüberliegenden Seite der Stege 232, 233 und 236 sind weitere Stege 250, 251 und 252 angeordnet, die ebenfalls dazu dienen, die beiden Rohren 234 und 235 miteinander zu verbinden. Wie der untere Steg 232, der auf dem Pfosten 231 angeordnet ist, so ist auch der Steg 252 auf einem Posten 253 des Modulbrückenverbinders 230 angeordnet. An der Außenseite des Pfostens 253 beziehungsweise des Rohrs 235 ist ein Blech 254 angeordnet. Auch dieses Blech 254 ist mit dem Rohr 235 verschraubt und mit dem Pfosten 253 verschweißt. Zu erkennen ist der Abschnitt 238 des Postens 231 beziehungsweise der Abschnitt 255 des Pfostens 253. Obwohl die beiden Posten 231, 253 auf Füßen angeordnet sind, sind diese Stützfüße in Figur 15 nicht dargestellt.

In Figur 16 ist eine Draufsicht auf den in Figur 14 gezeigten Modulbrückenverbinder 230 dargestellt. Dabei ist der Modulbrückenverbinder 230 nur ausschnittsweise gezeigt. Zu erkennen sind die beiden Rohre 234 und 235 des Doppelrohrsystems 237. Dieses Doppelrohrsystem 237 ist mit dem Steg 232 auf dem Pfosten 231 angeordnet, der jedoch von dem Steg 233 überdeckt ist, weshalb der Steg 232 in Figur 16 nicht zu erkennen ist. Der Abschnitt 238 des Pfostens 231 ist zwischen den beiden Rohren 234, 235 angeordnet. Zwischen dem Steg 233 und dem Abschnitt 238 des Pfostens 231 ist eine Öffnung 256 zu erkennen. In diese Öffnung 256 kann ein Geländerpfosten eingebracht werden. Ein Geländerpfosten ist in Figur 16 nicht dargestellt. An dem Pfosten 231 und dem Doppelrohrsystem 237 ist das Blech 249 angebracht. Auf der gegenüberliegenden Seite des Modulbrückenverbinders 230 ist das Blech 254 ebenfalls mit dem Pfosten 253 und mit den beiden Rohren 234 und 235 verbunden. Wie auch der Pfosten 231 weist der Pfosten 253 eine Öffnung 257 auf, in die ein Geländerpfosten eingebracht werden kann. Ein solcher Geländerpfosten ist in Figur 16 jedoch nicht dargestellt.

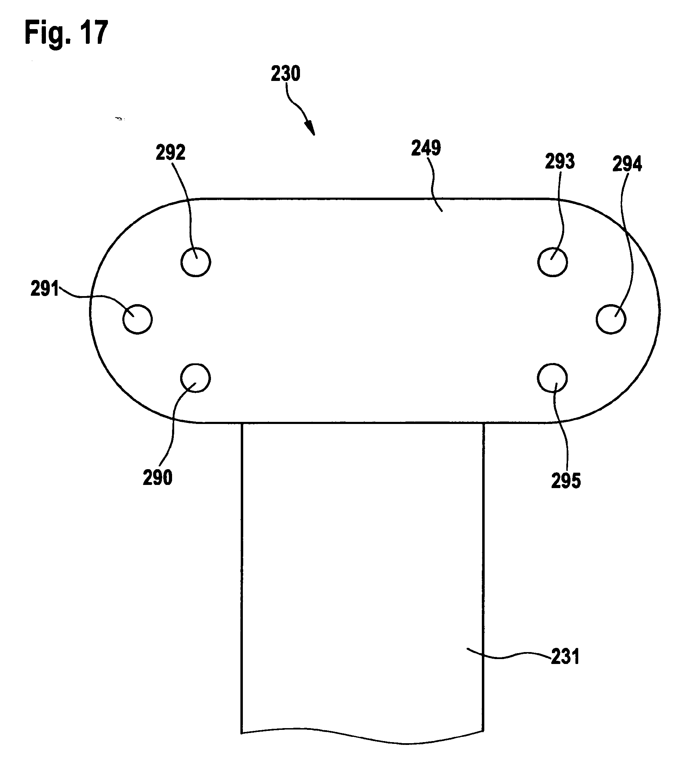

Figur 17 zeigt das an dem Pfosten 231 des Modulbrückenverbinders 230 angeordnete Blech 249 gemäß den Figuren 14 bis 16, wobei in Richtung des Pfeils G geblickt wird. Dieses Blech 249 ist an dem Pfosten 231 angebracht. Dieses Blech 249 weist sechs Öffnungen 290 bis 295 auf. In diese Öffnungen 290 bis 295 können in Figur 17 nicht darstellte Verbindungselemente, z. B. Schrauben, eingebracht werden, mittels denen das Blech 249 mit den beiden Rohren 234 und 235 fixiert werden kann. Diese Verbindungselemente können aus einem beliebigen Material, z. B. Aluminium, Holz, Stahl oder Kunststoff bestehen. Dabei wird über die Öffnungen 290 bis 292 das Blech 249 mit dem Rohr 235 und über die Öffnungen 293 bis 295 mit dem Rohr 234 verbunden. Wie in Figur 17 zu erkennen, weist das Blech 249 lediglich sechs Öffnungen 290 bis 295 auf. Damit wird ein jedes Rohr 234 beziehungsweise 235 des Doppelrohrsystems 237 über jeweils drei Verbindungselemente mit dem Blech 249 verbunden. Natürlich ist es auch möglich, zwei weitere Öffnungen vorzusehen, um das Blech 249 mit jeweils vier Verbindungselementen mit den beiden Rohren 234 und 235 zu verbinden. Diese Variante ist jedoch in Figur 17 nicht dargestellt. Es versteht sich, dass das Blech 249 mit den beiden Rohren 234 und 235 auch verschweißt werden kann. In diesem Fall wären keine Öffnungen für das Einbringen von Verbindungselementen erforderlich.

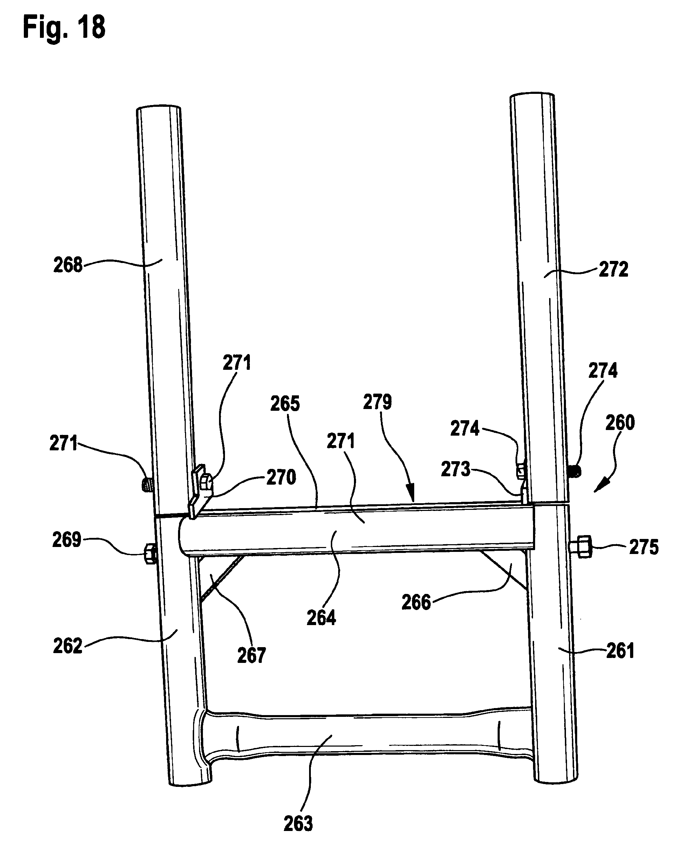

Figur 18 zeigt eine Variante des in den Figuren 5 bis 7 dargestellten Modulbrückenverbinders 77. Der in Figur 18 dargestellte Modulbrückenverbinder 260 weist zwei Pfosten 261 und 262 auf, die über eine Verstrebung 263 miteinander verbunden sind. Füße sind in Figur 18 nicht dargestellt. Zwei Balken 264, 265 für die Aufnahme von Modulen sind oberhalb der Verstrebung 263 angeordnet. Diese Balken 264, 265, die als Rohre 264, 265 ausgebildet sind, verbinden die beiden Pfosten 261, 262 miteinander. Diese zwei Balken 264, 265 bilden somit eine Doppelrohrkonstruktion 279. Zwei Knotenbleche 266, 267 sind an den Pfosten 261, 262 angeordnet und stützen die beiden Balken 264, 265. Bei dem Modulbrückenverbinder 260 handelt es sich um eine Schweißkonstruktion, bei der alle Elemente miteinander verschweißt sind.

Auf dem Pfosten 262 ist ein Geländerpfosten 268 aufgesteckt. Mittels eines Verbindungselements 269, z. B. einer Schraube, ist der Geländerpfosten 268 mit dem Pfosten 262 fest verbunden. An dem Geländerpfosten 268 ist eine Aushebesicherung 270 vorgesehen. Diese Aushebesicherung 270 ist über ein Verbindungselement 271 mit dem Geländerpfosten 268 verbunden. Dieses Verbindungselement 271, z. B. eine Schraube, ist durch den Pfosten 268 hindurch gesteckt. Auch auf dem Pfosten 261 ist ein Geländerpfosten 272 mit einer Aushebesicherung 273 angeordnet. Die Aushebesicherung 273 ist über ein Verbindungselement 274 mit dem Geländerpfosten 272 verbunden. Der Geländerpfosten 272 ist auf dem Pfosten 261 angeordnet und mit diesem über ein Verbindungselement 275 verbunden.

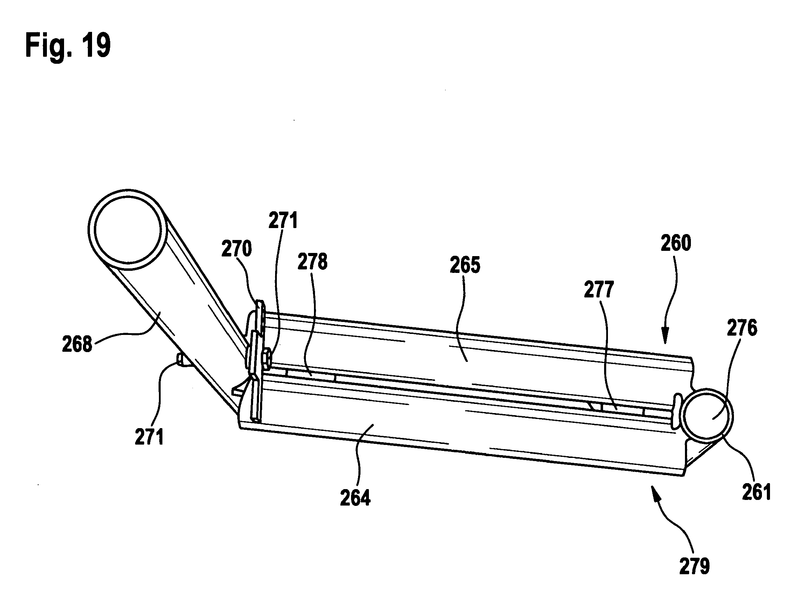

In Figur 19 ist eine Draufsicht des in Figur 18 dargestellten Modulbrückenverbinders 260 gezeigt. Über das Verbindungselement 271 ist die Aushebesicherung 270 an dem Geländerpfosten 268 angeordnet. Der Geländerpfosten 272 ist in Figur 19 nicht dargestellt. Die beiden Pfosten 261 und 262 sind über die beiden Balken 264 und 265 miteinander verbunden, wobei in Figur 19 nur der Pfosten 261 zu erkennen ist, weil auf dem Pfosten 262 der Geländepfosten 268 angeordnet ist. Der Pfosten 261 weist eine Öffnung 276 auf, in die der in Figur 19 nicht gezeigte Geländerpfosten 272 eingesteckt werden kann. Unterhalb der beiden Balken 264 und 265 sind zwei Brücken 277, 278 angeordnet, die die beiden Balken 264 und 265 miteinander verbinden. Die beiden Brücken 277, 278 sind über jeweils ein Knotenblech 266 beziehungsweise 267 mit dem Pfosten 262 beziehungsweise mit dem Pfosten 261 verbunden. Die beiden Knotenbleche 266 und 267 sind jedoch in Figur 19 nicht zu sehen. Dadurch, dass die beiden Balken 264 und 265 auf den Brücken 277, 278 angeordnet sind, wird der Modulbrückenverbinder 260 zusätzlich stabilisiert, wenn auf dem Modulbrückenverbinder 260 Module angeordnet sind. Module sind jedoch in Figur 19 nicht dargestellt.

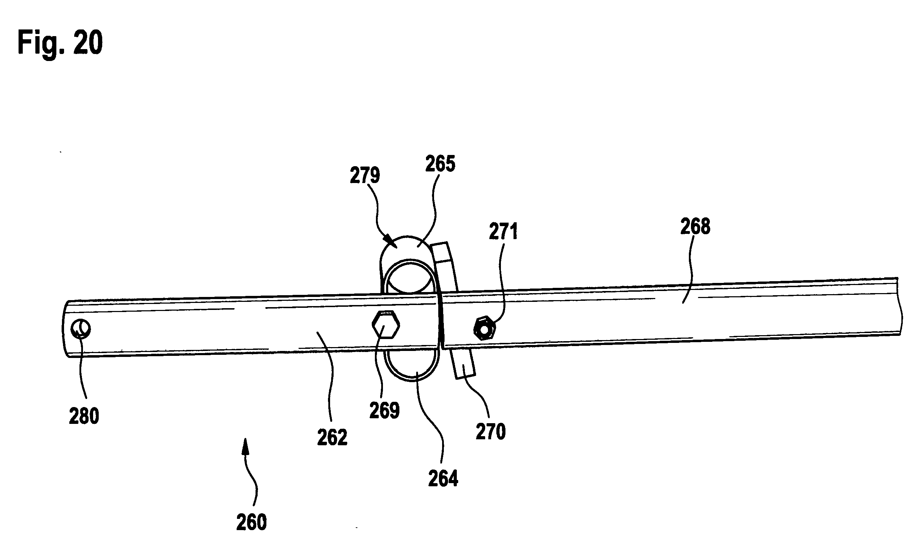

In Figur 20 ist eine Seitenansicht es in Figur 18 dargestellten Modulbrückenverbinders 260 gezeigt, auf dem der Geländerpfosten 268 angeordnet ist. Der Geländerpfosten 268 ist über das Verbindungselement 269 mit den Pfosten 262 verbunden. An dem Pfosten 262 sind die beiden Balken 264, 265 angeordnet, die rohrförmig ausgebildet sind und das Doppelrohrsystem 279 bilden. An dem Geländerpfosten 268 ist über das Verbindungselement 271 die Aushebesicherung 270 angeordnet. Zu erkennen ist ferner eine im unteren Abschnitt des Pfostens 262 angeordnete Öffnung 280. In diese Öffnung 280 kann ein in der Figur 20 nicht dargestelltes Verbindungselement eingebracht werden, mit dem ein Fuß mit dem Pfostens 262 verbunden werden kann. Dieser Fuß kann beispielsweise wie der in Figur 8 abgebildete Fuß 104 aufgebaut sein. Ein Fuß ist in Figur 20 der Übersicht halber nicht dargestellt. Diese Öffnung 280 dient auch dazu, den Modulbrückenverbinder 260 mittels eines Verbindungselements mit den in Figur 1 dargestellten Rohrstümpfen 36 bis 44 zu verbinden. Dadurch kann der Modulbrückenverbinder 260 fest an den Rohrstümpfen 36 bis 44 angeordnet werden.

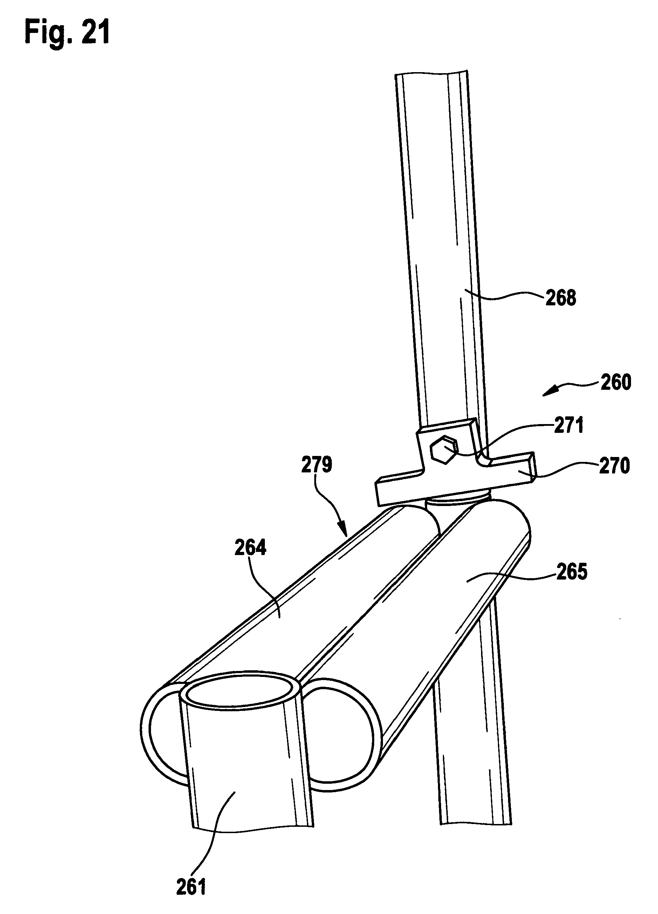

Figur 21 zeigt den Modulbrückenverbinder 260 mit dem daran angeordneten Geländerpfosten 268. Über das Verbindungselement 271 ist die Aushebesicherung 270 an dem Geländerpfosten 268 angeordnet. Die Balken 264, 265, die zwischen den beiden Pfosten 261, 262 angeordnet sind, sind ebenfalls zu erkennen. Werden nun Module auf dem Modulbrückenverbinder 260 angeordnet, so ist die Aushebesicherung 270 oberhalb dieser Module angeordnet, wie dies z. B. in Figur 9 oder 10 gezeigt ist. Diese Aushebesicherung 270 gewährleistet somit, dass die auf den Balken 264, 265 angeordneten Module fest auf dem Modulbrückenverbinder 260 angeordnet sind und nicht von diesem fallen können.

Obwohl die Ausführungsbeispiele der Erfindung oben detailliert beschrieben wurden, ist die Erfindung nicht auf diese Ausführungsbeispiele beschränkt. Ein Fachmann versteht, dass die Erfindung verschiedene Varianten, wie beansprucht, mit umfasst, mit denen dasselbe Ergebnis erzielt wird wie mit den hier beschriebenen Ausführungsbeispielen. Es ist deshalb für den Fachmann klar, dass mit den hier beschriebenen Ausführungsbeispielen der Schutzumfang der Ansprüche nicht eingeschränkt wird und dass es weitere Varianten, Modifikationen und Alternativen gibt, die unter den Schutzumfang der Ansprüche fallen.

### Bezugszeichenliste

- 1: Be- und Entladerampe
- 2: Rampenbasis
- 3: Gestell
- 4: Rad
- 5: Rad
- 6: Achse
- 7: Anhängerdeichsel
- 8: Anhängerkupplung
- 9: Feststellbremse
- 10: Stützfuß
- 11: Stützfuß
- 12: Abschirmvorrichtung
- 13: Abschirmvorrichtung
- 14: Rückleuchte
- 15: Rückleuchte
- 16: Seite
- 17: Tür/Brücke
- 18: Schloss
- 19: Griff
- 20: Griff
- 21: Oberseite
- 22: Öffnung
- 23: Öffnung
- 24: Öffnung
- 25: Öffnung
- 26: Kasten
- 27: Kasten
- 28: Kasten
- 29: Auffahrblech
- 30: verlängerter Abschnitt
- 31: Scharnier
- 32: Auffahrblech
- 33: verlängerter Abschnitt
- 34: Scharnier
- 35: Wand
- 36: Rohrstumpf
- 37: Rohrstumpf
- 38: Rohrstumpf
- 39: Rohrstumpf
- 40: Rohrstumpf
- 41: Rohrstumpf
- 42: Rohrstumpf
- 43: Rohrstumpf
- 44: Rohrstumpf
- 45: Rohrstumpf
- 46: Rohrstumpf
- 47: Rohrstumpf
- 48: Rampe
- 49: Lastwagen
- 50: Boden
- 51: Geländerlauf
- 52: Geländerpfosten
- 53: Geländerpfosten
- 54: Stange
- 55: Stange
- 56: Innenraum
- 57: Zwischenwand
- 58: Zwischenwand
- 59: Zwischenwand
- 60: Zwischenraum
- 61: Zwischenraum
- 62: Zwischenraum
- 63: Zwischenraum
- 64: äußere Wand
- 65: äußere Wand
- 66: Lagerwinkel
- 67: Lagerwinkel
- 68: Lagerwinkel
- 69: Lagerwinkel
- 70: Achse
- 71: Seite
- 72: Pfeil
- 73: Brücke
- 74: Modul
- 75: Modul
- 76: Modul
- 77: Modulbrückenverbinder
- 78: Pfosten
- 79: Pfosten
- 80: Aufnahmerahmen
- 81: Modulbrückenverbinder
- 82: Modul
- 83: Modul
- 84: Modul
- 85: Brücke
- 86: Auflagevorrichtung
- 87: Pfosten
- 88: Pfosten
- 89: Modulbrückenverbinder
- 90: Aufnahmerahmen
- 91: Pfosten
- 92: Pfosten
- 93: Modul
- 94: Modul
- 95: Modul
- 96: Modulbrückenverbinder
- 97: Wandabschnitt
- 98: Scharnier
- 99: Stützfuß
- 100: Modul
- 101: Modul
- 102: Modul
- 103: Modul
- 104: Stützfuß
- 105: Verstrebung
- 106: Fuß
- 107: Aufnahmerahmen
- 108: Stützfuß
- 109: Modul
- 110: Aufnahmerahmen
- 111: Modulbrückenverbinder
- 112: Modul
- 113: Modul
- 114: Endmodul
- 115: Modulbrückenverbinder
- 116: Modulbrückenverbinder
- 117: Modulbrückenverbinder
- 118: Geländerlauf
- 119: Pfosten
- 120: Pfosten
- 121: Pfosten
- 122: Pfosten
- 123: Stange
- 124: Stange
- 125: Deckel
- 126: Aufnahmerahmen
- 127: Aufnahmerahmen
- 128: Aufnahmerahmen
- 129: Fuß
- 130:
- 131: Pfeil
- 132: Abschnitt
- 133: Abschnitt
- 134: Abschnitt
- 135: Abschnitt
- 136: Abschnitt
- 137: Abschnitt
- 138: Abschnitt
- 139: Abschnitt
- 140: Öffnung
- 141: Öffnung
- 142: Balken
- 143: Balken
- 144: Verstrebung
- 145: Pfosten
- 146: Knotenblech
- 147: Knotenblech
- 148: Knotenblech
- 149: Knotenblech
- 150: Knotenblech
- 151: Aufsatz
- 152: Öffnung
- 153: Scharnierwelle
- 154: Scharnieröse
- 155: Auflageprofil
- 156: Auflageprofil
- 157: Ende von 156
- 158: Pfeil
- 159: Pfeil
- 160: Überbrückungsstück
- 161: Oberfläche
- 162: Oberfläche
- 163: Aushebesicherung
- 164: Öffnung

- 165: Aufsatz
- 166: Rohr
- 167: Rohr
- 168: Auflageprofil
- 169: Auflageprofil
- 170: Überbrückungsstück
- 171: Aushebesicherung
- 172: Aufsatz
- 173: stabförmiges Element
- 174: Öffnung
- 175: Verbindungselement
- 176: unterer Bereich von 173
- 177: Öffnung
- 178: Öffnung
- 179: Pfeil
- 180: Lagerschale
- 181:
- 182: Lagerschale
- 183: Lagerschale
- 184: Lagerschale
- 185: Be- und Entladerampe
- 186: Rampenbasis
- 187: Brücke / Tür
- 188: Scharnier
- 189: Scharnieröse
- 190: Scharnierwelle
- 191: Verlängerter Abschnitt
- 192: Oberseite von 186
- 193: obere Wand
- 194: untere Wand
- 195: Gestell
- 196: Innenraum von 186
- 197: Modul
- 198: Lagerwinkel
- 199: Kunststoffelement
- 200: Pfeil
- 201: Pfeil
- 202: Dämpfungselement
- 203: Dämpfungselement
- 204: Dichtungselement
- 205: Dichtungselement
- 206: Wand
- 207: Pfeil
- 208: Pfeil
- 209: Lücke
- 210: Öffnung
- 211: Öffnung
- 212: Öffnung
- 213: Öffnung
- 214: Öffnung
- 215: Öffnung
- 216: Öffnung
- 217: Öffnung
- 218: Öffnung
- 219: Öffnung
- 220: Öffnung
- 221: Öffnung
- 222: Öffnung
- 223: Öffnung
- 224: Öffnung
- 225: Öffnung
- 226: Öffnung
- 227: Öffnung
- 228: Öffnung
- 229: Seitenwand
- 230: Modulbrückenverbinder
- 231: Pfosten
- 232: Steg
- 233: Steg
- 234: Rohr
- 235: Rohr
- 236: Verbindungssteg
- 237: Doppelrohrsystem
- 238: oberer Abschnitt
- 239: inneres Rohr
- 240: inneres Rohr
- 241: inneres Rohr
- 242: inneres Rohr
- 243: inneres Rohr
- 244: inneres Rohr
- 245: inneres Rohr
- 246: inneres Rohr
- 247: kreuzförmiges Stegsystem
- 248: kreuzförmiges Stegsystem
- 249: Blech
- 250: Steg
- 251: Steg
- 252: Steg
- 253: Pfosten
- 254: Blech
- 255: Abschnitt von 253
- 256: Öffnung
- 257: Öffnung
- 258:
- 259:
- 260: Modulbrückenverbinder
- 261: Pfosten
- 262: Pfosten
- 263: Verstrebung
- 264: Balken
- 265: Balken
- 266: Knotenblech
- 267: Knotenblech
- 268: Geländerpfosten
- 269: Verbindungselement
- 270: Aushebesicherung
- 271: Verbindungselement
- 272: Geländerpfosten
- 273: Aushebesicherung
- 274: Verbindungselement
- 275: Verbindungselement
- 276: Öffnung
- 277: Brücke
- 278: Brücke
- 279: Doppelrohrkonstruktion
- 280: Öffnung
- 281: Doppelrohrsystem
- 282: Doppelrohrsystem
- 283:
- 284:
- 285:
- 286:
- 287:
- 288:
- 289:
- 290: Öffnung
- 291: Öffnung
- 292: Öffnung
- 293: Öffnung
- 294: Öffnung
- 295: Öffnung

## Patentansprüche

1. Modular aufgebaute, bewegbare Be- und Entladerampe (1, 185), mit einer Rampenbasis (2, 186),
wobei mindestens eine Brücke (17, 73, 187') sowie n Module (74 - 76, 82 - 84, 93 - 95, 109, 112 -114) für jede der mindestens einen Brücke (17, 73, 187') vorgesehen sind, wobei die mindestens eine Brücke (17, 73, 187') im aufgebauten Zustand zwischen der Rampenbasis (2, 186) und den n Modulen (74 - 76, 82 - 84, 93 - 95, 109, 112 - 114) angeordnet ist,
**dadurch gekennzeichnet, dass** die Brücke (73, 187') und die benachbarten Module (74 - 76) mit ihren Enden zumindest teilweise auf einem Doppelrohrsystem (237, 279, 281, 282) eines Modulbrückenverbinders (77, 81, 111, 115 - 117, 230, 260) der Be-und Entladerampe (1, 185) angeordnet sind.

2. Bewegbare Be- und Entladerampe (1) nach Anspruch 1, **dadurch gekennzeichnet, dass** die Be- und Entladerampe (1) als Anhänger ausgebildet ist, der eine Anhängerkupplung (8) aufweist, über die die Be- und Entladerampe (1) an einen Pkw angehängt werden kann.

3. Bewegbare Be- und Entladerampe (1) nach Anspruch 1, **dadurch gekennzeichnet, dass** die Modulbrückenverbinder (77, 81, 111, 115 - 117) Pfosten aufweisen, die teleskopisch ineinander geschoben werden können, wodurch die Höhe der Modulbrückenverbinder (77, 81, 111, 115 - 117) einstellbar ist.

4. Bewegbare Be- und Entladerampe (1) nach Anspruch 1, **dadurch gekennzeichnet, dass** die Modulbrückenverbinder (77, 81, 111, 115 - 117) zwischen Rohrstümpfen (36 - 47) gelagert sind.

5. Bewegbare Be- und Entladerampe (1) nach Anspruch 1, **dadurch gekennzeichnet, dass** wenigstens ein Geländerlauf (51, 118) an den Modulbrückenverbindem (77, 81, 111, 115 -117) angeordnet ist.

6. Bewegbare Be- und Entladerampe (1) nach Anspruch 1, **dadurch gekennzeichnet, dass** wenigstens ein Modul (114) mit einem Boden (50) in Kontakt steht.

7. Bewegbare Be- und Entladerampe (1) nach Anspruch 1, **dadurch gekennzeichnet, dass** die Module (74 - 76, 82 - 84, 93 - 95, 109, 112 - 114) auf einem Balken (142, 143; 166, 167) des Doppelrohrsystems (237, 279, 281, 282) angeordnet sind.

8. Bewegbare Be- und Entladerampe (1) nach Anspruch 1, **dadurch gekennzeichnet, dass** die Rampenbasis (2, 186) zwei Auffahrbleche (29, 32) aufweist, die über ein Scharnier (31, 34) mit einer Oberseite (21) der Rampenbasis (2, 118) verbunden sind.

9. Bewegbare Be- und Entladerampe (1) nach Anspruch 1, **dadurch gekennzeichnet, dass** der Modulbrückenverbinder (77, 81, 111, 115 - 117) aus jeweils zwei Pfosten (78, 79, 231, 253, 261, 262) besteht, die über Doppelrohrsysteme (237, 279, 281, 282) miteinander verbunden sind.

10. Bewegbare Be- und Entladerampe (1) nach Anspruch 1, **dadurch gekennzeichnet, dass** die Rampenbasis (2, 186) einen Innenraum (56, 196) aufweist, der in mehrere Zwischenräume (60 - 63) unterteilt ist.

11. Bewegbare Be- und Entladerampe (1) nach Anspruch 10, **dadurch gekennzeichnet, dass** in den Zwischenräumen (60 - 63) Lagerwinkel (66 - 69, 198) für die Lagerung der Module (100 - 103, 197) vorgesehen sind.

12. Bewegbare Be- und Entladerampe (1) nach Anspruch 9, **dadurch gekennzeichnet, dass** die Doppelrohrsysteme (281, 282) der Modulbrückenverbinder (77, 81, 111, 115 - 117) an Aufnahmerahmen (80, 107, 110, 126 -128) angeordnet sind.

13. Bewegbare Be- und Entladerampe (1) nach Anspruch 1, **dadurch gekennzeichnet, dass** zwischen zwei gegenüberliegenden Modulen (75, 84), die an einem Doppelrohrsystem (281) eines Modulbrückenverbinders (81) angeordnet sind, eine Lücke vorgesehen ist und in diese Lücke (209) ein Übergangsstück (170) eingebracht ist.

14. Bewegbare Be- und Entladerampe (1) nach Anspruch 13, **dadurch gekennzeichnet, dass** das Übergangsstück (170) zwischen den beiden Modulen (75, 84) und einer Aushebesicherung (171) angeordnet ist, wobei die Aushebesicherung (171) die Module (75, 84) sowie das Übergangsstück (170) zumindest teilweise überdeckt.

## Claims

1. Movable loading and unloading ramp (1, 185) of modular design, comprising a ramp base (2, 186), at least one bridge (17, 73, 187') and n modules (74-76, 82-84, 93-95, 109, 112-114) for each of the at least one bridge (17, 73, 187') being provided, the at least one bridge (17, 73, 187'), when assembled, being arranged between the ramp base (2, 186) and the n modules (74-76, 82-84, 93-95, 109, 112-114), **characterised in that** the ends of the bridge (73, 187') and of the adjacent modules (74-76) are arranged at least in part on a double tube system (237, 279, 281, 282) of a module bridge connector (77, 81, 111, 115-117, 230, 260) of the loading and unloading ramp (1, 185).

2. Movable loading and unloading ramp (1) according to claim 1, **characterised in that** the loading and unloading ramp (1) is designed as a trailer which comprises a trailer coupling (8) via which the loading and unloading ramp (1) can be attached to a passenger vehicle.

3. Movable loading and unloading ramp (1) according to claim 1, **characterised in that** the module bridge connectors (77, 81, 111, 115-117) comprise posts which can be telescoped, whereby the height of the module bridge connectors (77, 81, 111, 115-117) can be set.

4. Movable loading and unloading ramp (1) according to claim 1, **characterised in that** the module bridge connectors (77, 81, 111, 115-117) are mounted between tube butts (36-47).

5. Movable loading and unloading ramp (1) according to claim 1, **characterised in that** at least one rail (51, 118) is arranged on the module bridge connectors (77, 81, 111, 115-117).

6. Movable loading and unloading ramp (1) according to claim 1, **characterised in that** at least one module (114) is in contact with a floor (50).

7. Movable loading and unloading ramp (1) according to claim 1, **characterised in that** the modules (74-76, 82-84, 93-95, 109, 112-114) are arranged on a beam (142, 143; 166, 167) of the double tube system (237, 279, 281,282).

8. Movable loading and unloading ramp (1) according to claim 1, **characterised in that** the ramp base (2, 186) comprises two access plates (29, 32) which are connected via a hinge (31, 34) to an upper side (21) of the ramp base (2, 118).

9. Movable loading and unloading ramp (1) according to claim 1, **characterised in that** the module bridge connector (77, 81, 111, 115-117) consists in each case of two posts (78, 79, 231, 253, 261, 262) which are interconnected via double tube systems (237, 279, 281, 282).

10. Movable loading and unloading ramp (1) according to claim 1, **characterised in that** the ramp base (2, 186) comprises an inner space (56, 196) which is subdivided into a plurality of intermediate spaces (60-63).

11. Movable loading and unloading ramp (1) according to claim 10, **characterised in that** mounting brackets (66-69, 198) for mounting the modules (100-103, 197) are provided in the intermediate spaces (60-63).

12. Movable loading and unloading ramp (1) according to claim 9, **characterised in that** the double tube systems (281, 282) of the module bridge connectors (77, 81, 111, 115-117) are arranged on receiving frames (80, 107, 110, 126-128).

13. Movable loading and unloading ramp (1) according to claim 1, **characterised in that** a gap is provided between two opposing modules (75, 84) which are arranged on a double tube system (281) of a module bridge connector (81), and a transition piece (170) is inserted into this gap (209).

14. Movable loading and unloading ramp (1) according to claim 13, **characterised in that** the transition piece (170) is arranged between the two modules (75, 84) and an anti-removal device (171), the anti-removal device (171) covering the modules (75, 84) and the transition piece (170) at least in part.

## Revendications

1. Rampe de chargement et de déchargement mobile (1, 185) de conception modulaire, ayant une base de rampe (2, 186),
dans laquelle au moins un pont (17, 73, 187') ainsi que n modules (74-76, 82-84, 93-95, 109, 112-114) sont prévus pour chacun des au moins un pont (17, 73, 187'), dans lequel le au moins un pont (17, 73, 187') est aménagé à l'état monté entre la base (2, 186) de la rampe et les n modules (74-76, 82-84, 93-95, 109, 112-114),
**caractérisée en ce que** le pont (73, 187') et les modules voisins (74-76) sont aménagés, par leurs extrémités, au moins en partie sur un système à double tube (237, 279, 281, 282) d'un raccord pont-module (77, 81, 111, 115-117, 230, 260) de la rampe de chargement et de déchargement (1, 185).

2. Rampe de chargement et de déchargement mobile (1) selon la revendication 1, **caractérisée en ce que** la rampe de chargement et de déchargement (1) est conformée en remorque, qui présente un couplage de remorque (8), par lequel la rampe de chargement et de déchargement (1) peut être remorquée par une voiture particulière.

3. Rampe de chargement et de déchargement mobile (1) selon la revendication 1, **caractérisée en ce que** les raccords pont-module (77, 81, 111, 115-117) présentent des montants, qui peuvent être glissés l'un dans l'autre de manière télescopique, si bien que la hauteur des raccords pont-module (77, 81, 111, 115-117) peut être réglée.

4. Rampe de chargement et de déchargement mobile (1) selon la revendication 1, **caractérisée en ce que** les raccords pont-module (77, 81, 111, 115-117) sont montés entre des bouts de tubes (36-47).

5. Rampe de chargement et de déchargement mobile (1) selon la revendication 1, **caractérisée en ce qu'**au moins une main courante (51, 118) est aménagée sur les raccords pont-module (77, 81, 111, 115-117).

6. Rampe de chargement et de déchargement mobile (1) selon la revendication 1, **caractérisée en ce qu'**au moins un module (114) est en contact avec le sol (50).

7. Rampe de chargement et de déchargement mobile (1) selon la revendication 1, **caractérisée en ce que** les modules (74-76, 82-84, 93-95, 109, 112-114) sont aménagés sur une poutre (142, 143 ; 166, 167) du système à double tube (237, 279, 281, 282).

8. Rampe de chargement et de déchargement mobile (1) selon la revendication 1, **caractérisée en ce que** la base (2, 186) de la rampe présente deux tôles d'accès (29, 32), qui sont reliées, via une charnière (31, 34), à une face supérieure (21) de la base (2, 118) de la rampe.

9. Rampe de chargement et de déchargement mobile (1) selon la revendication 1, **caractérisée en ce que** les raccords pont-module (77, 81, 111, 115-117) sont constitués de respectivement deux montants (78, 79, 231, 253, 261, 262), qui sont raccordés l'un à l'autre via des systèmes à double tube (237, 279, 281, 282).

10. Rampe de chargement et de déchargement mobile (1) selon la revendication 1, **caractérisée en ce que** la base (2, 186) de la rampe présente un espace interne (56, 196), qui est subdivisé en plusieurs espaces intermédiaires (60-63).

11. Rampe de chargement et de déchargement mobile (1) selon la revendication 10, **caractérisée en ce qu'**il est prévu dans les espaces intermédiaires (60-63) des angles de positionnement (66-69, 198) pour le positionnement des modules (100-103, 197).

12. Rampe de chargement et de déchargement mobile (1) selon la revendication 9, **caractérisée en ce que** les systèmes à double tube (281, 282) des raccords pont-module (77, 81, 111, 115-117) sont aménagés sur des cadres récepteurs (80, 107, 110, 126-128).

13. Rampe de chargement et de déchargement mobile (1) selon la revendication 1, **caractérisée en ce qu'**il est prévu entre deux modules opposés (75, 84), qui sont aménagés sur un système à double tube (281) d'un raccord pont-module (81), un espace libre et une pièce de transition (170) est insérée dans cet espace libre (209).

14. Rampe de chargement et de déchargement mobile (1) selon la revendication 13, **caractérisée en ce que** la pièce de transition (170) est aménagée entre les deux modules (75, 84)et un dispositif de sécurité anti-soulèvement (171), dans laquelle le dispositif de sécurité anti-soulèvement (171) recouvre les modules (75, 84) ainsi que la pièce de transition (170) au moins en partie.
